(19) Europäisches Patentamt

European Patent Office

Office européen des brevets

(11) **EP 2 279 426 B1**

(12) **EUROPEAN PATENT SPECIFICATION**

(45) Date of publication and mention
of the grant of the patent:
**23.05.2012 Bulletin 2012/21**

(51) Int Cl.:
***G01S 19/43*** *(2010.01)*    ***G01S 19/29*** *(2010.01)*
***G01S 19/23*** *(2010.01)*

(21) Application number: **09731130.2**

(22) Date of filing: **09.04.2009**

(86) International application number:
**PCT/EP2009/054337**

(87) International publication number:
**WO 2009/125011 (15.10.2009 Gazette 2009/42)**

(54) **METHOD FOR VECTOR PHASE TRACKING A PLURALITY OF GLOBAL POSITIONING SATELLITE CARRIER SIGNALS**

VERFAHREN ZUR VEKTORPHASENVERFOLGUNG EINER VIELZAHL VON TRÄGERSIGNALEN GLOBALER POSITIONSBESTIMMUNGSSATELLITEN

PROCÉDÉ DE POURSUITE DE PHASE VECTORIELLE D'UNE PLURALITÉ DE SIGNAUX PORTEURS DE SATELLITES DE POSITIONNEMENT GLOBAL

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **11.04.2008 EP 08007248**
**11.04.2008 EP 08007249**

(43) Date of publication of application:
**02.02.2011 Bulletin 2011/05**

(73) Proprietor: **Technische Universität München**
**80333 München (DE)**

(72) Inventors:
• **HENKEL, Patrick**
**82275 Emmering (DE)**
• **GÜNTHER, Christoph**
**82234 Wessling (DE)**

(74) Representative: **Herrmann, Franz**
**Dendorfer & Herrmann**
**Patentanwälte Partnerschaft**
**Bayerstrasse 3**
**80335 München (DE)**

(56) References cited:
**WO-A-2007/042461**    **US-A1- 2005 116 857**
**US-A1- 2005 175 075**    **US-B1- 6 313 789**

## Description

The invention relates to a method for vector phase tracking a plurality of global positioning satellite carrier signals comprising the steps of:

- determining the input phase tracking error signals by a phase extraction unit depending on trackable carrier signals and oscillator signals associated with the trackable carrier signals;
- transforming the input phase tracking error signals in a spatial domain by a transformation unit for generating spatial difference signals;
- filtering the spatial difference signals by a filter;
- performing a back transformation of the spatial difference signals into output phase tracking error signals by a back transformation unit for generating control signals for the oscillators that are generating the oscillator signals
- generating output phase signals depending on the output phase tracking error signals by an output phase signal accumulator.

The invention further relates to a device for global satellite navigation that is arranged for executing the method.

Such a method and such a device is known from US 6,313,789 B1. The known method increases the fail-safety characteristics of tracking systems for navigation receivers which receive signals from many satellites. An individual PLL circuit is used to track the phase of each satellite's carrier signal, and a vector common tracking loop is used to track the disturbances of the carrier phases which are caused by one or more common sources, such as the movement of the receiver's antenna or the phase fluctuation of the receiver's main reference oscillator. For tracking the disturbances of the carrier phases, a phase extraction unit is used that comprises a discriminator for determining a phase tracking error signal. The phase tracking error signals are transformed in a position domain, in particular, in a spatial domain that is related to the movement of the receiver's antenna. The difference signals in the position domain are filtered and a back transformation of the difference signals in the position domain into phase tracking error signals is performed for generating error control signals that are combined with the control signal from the individual loops and the oscillator.

The vector common tracking loop uses phase information from all of the satellites being tracked. For this reason the vector common tracking loop can be made more wide-band than for each of the individual PLL circuits. The wider bandwidth of the vector common tracking loop provides higher dynamic properties and safer tracking when faint and weakening satellite signals are present.

One disadvantage of the known method and of the known device is that the atmospheric delays are not prorperly determined. The ionospheric and tropospheric delays are not separated form the receiver position and clock drift. Thus, the filters are not optimized with respect to the different dynamics of the receiver and the atmospheric delay which degrades the tracking performance considerably.

The global navigation satellite system Galileo provides precise carrier phase measurements on four frequencies. Linear combinations can be efficiently computed and simplify integer ambiguity resolution due to a large wavelength. Three frequency reduced-ionosphere linear combinations with wavelengths up to 29.3 m have been computed in [1]. The Galileo E5 signal has a bandwidth of 51 MHz which results in a code noise level of a few centimetres and motivates the design of joint code-carrier combinations. An L1-E5 ionosphere-free code-carrier combination with a wavelength of 3.215 m and a noise level of 3.8 cm has been derived in [2].

Multi-frequency linear combinations are sensitive to ionospheric scintillations: Deep fades in signal amplitude of more than 20 dB and an increased phase noise level [3][4] might result in frequent loss of lock of the carrier tracking loops. Moreover, carrier phase multipath or interference from jammer can affect one or more frequency bands [5].

Current GNSS receivers use independent Phase Locked Loops (PLLs) for each satellite and frequency. The introduction of new GPS signals on L5 and the development of new satellite constellations (Galileo, Compass) will increase the number of PLLs and, thus, the probability of a loss of lock of one PLL. This probability becomes critical especially during the ionospheric scintillations with frequent deep amplitude fades of more than 20 dB. Another threat are the jammers with random frequency hopping that continuously interfere at least one frequency. The outage of a PLL on one frequency prevents the computation of an ionosphere-free combination at this instant and, thus, degrades the positioning accuracy.

The joint tracking of all satellites goes back to Spilker who has proposed a Vector Delay Locked Loop (VDLL) for code delay tracking in [6]. The tracking errors were originally transformed into a position drift and a clock drift by weighted least-square estimation which does not consider ionospheric and tropospheric delays and other biases like multipath as individual parameters. The benefit of the VDLL is the adaptive weighting of satellites, i.e. the stronger signals help to track the weaker signals. However, the vector tracking of carrier phase is more challenging due to its higher precision and the existence of an unknown integer ambiguity for each satellite and frequency.

US 2005/0116857 Al discloses a GPS/Galileo/GLONASS bifrequency satellite radio navigation receiver having an ionospheric error correction loop, common to the two frequencies within the system. In particular, the ionospheric speed at the output of the system is used to correct the code speeds originating from the common loop corrector for each of the two frequencies.

Proceeding from this related art, the present invention seeks to provide a method and a device for vector phase tracking with improved correction of the ionospheric delay.

This object is achieved by a method and the device having the features of the independent claims. Advantageous embodiments and refinements are specified in claims dependent thereon.

In the method, the extraction unit is generating phase tracking error signals at different frequencies associated with the various carrier signals of a tracked satellite. Based on the phase tracking error signals supplied by the extraction unit, a multi-frequency-estimation of the ionospheric error is and the output phase tracking error signals at the output of the back transformation unit are determined depending on the estimated ionospheric error. Since the ionospheric delay is taken into account for the vector phase tracking, the method results in a robust carrier tracking during ionospheric scintillations, carrier phase multipath or interference from jammer.

In one embodiment, the trackable signal of a single satellite is tracked and the special difference signal is a range difference signal including clock offset error and tropospheric delay error. For determining a output phase tracking error signals at different frequencies associated with the various carrier signals of the satellite, a multi-frequency phase estimation is performed depending on the input phase tracking error signals at different frequencies, after the ionospheric error has been suppressed in the input phase tracking error signals at different frequencies. Since only a single satellite is tracked, the relative positions of the satellites have not to be taken into account. However, the control signals generated by this embodiment of the method are affected by a larger error than the control signals resulting from the tracking of a plurality of satellites.

Therefore, a plurality of satellites is tracked in another embodiment of the method. For each tracked satellite, the extraction unit is generating input phase tracking error signals at different frequencies associated with the various carrier signals of each tracked satellite. The phase tracking error signals supplied by the extraction unit at different frequencies are linearly combined for determining the ionospheric error. The ionospheric error is suppressed in the input phase tracking error signals and for determining an output phase tracking error signals associated with each tracked satellite, a multi-frequency phase estimation is performed based on the input phase tracking error signals at different frequencies. The method has the advantage that the statistical errors regarding the multi-frequency estimation of the phase tracking errors besides the ionospheric delay are smaller than the errors obtained by a method, in which the ionospheric delay is also determined by a multi-frequency phase estimation.

In one particular method for determining the ionospheric error, the phase tracking error signals at different frequencies are linearly combined at the condition that the combinations are geometry-free and preserving the ionospheric term. Using such combinations the ionospheric error can be estimated together with an estimation of the phase ambiguities.

The ionospheric error may further be adjusted based on measurements of the phase tracking error signals at subsequent periods by considering combinations measured at subsequent times. By considering time differenced combination, biases and phase ambiguities are eliminated and the ionospheric drift can be determined.

In most cases it might be sufficient to use a polynom of first order as a regression curve for determining the ionospheric drift.

In a further embodiment, the extraction unit is generating phase tracking error signals at different frequencies associated with the various carrier signals of a tracked satellite. Based on the phase tracking error signals supplied by the extraction unit, a multi-frequency-estimation of the ionospheric error and the range error is performed. The resulting ionospheric error and range error are filtered and transformed back into a phase tracking error for generating control signals for the oscillators that are generating the oscillator signals. In consequence, the effect of systematic error sources regarding the determination of a particular disturbance can be diminished.

In another embodiment, the multi-frequency estimation includes not only the estimation of the ionospheric error but also the estimation of the position error regarding the actual position of the receiver antenna, the receiver clock offset error and the tropospheric error. The method has the advantage, that the generated control signals for the oscillators are not affected by systematic errors that impair the determination of individual parameters such as the ionospheric delay. Since the multi-frequency estimation extends to all relevant parameters, the statistical errors of the resulting control signals are greater than the statistical errors resulting from the multi-frequency estimation of a limited number of parameters.

In one further embodiment, the multi-frequency phase estimation is performed with a weighted least-square estimation process that minimizes the quadratic norm of the differences of the measured phase tracking errors and the mapped unknown parameters wherein the unknown parameters are mapped into the space of the measured tracking errors by a mapping matrix, so that the information contained in all phase tracking error signals at various frequencies is used for determining the unknown parameters.

In a modified embodiment, at least one of the unknown parameters including the position error, the receiver clock offset error, the tropospheric error and the ionospheric error is determined by performing a projection operation that projects the measured phase tracking error and the mapping matrix on the subspace of the at least unknown parameter chosen from the list comprising the position error, the receiver clock offset error, the tropospheric error and the ionospheric error and by performing the multi-frequency phase estimation with a weighted least-square estimation process that minimizes the quadratic norm of the differences of the projected phase tracking error and the at least one mapped unknown parameter. In this manner, the filtering of the individual parameters can be performed with optimized filter parameters.

Generally, the mapping matrix contains the unit vectors pointing from the tracked satellites to the receiver, the ratios between the frequencies of carriers and a reference frequency and mapping coefficient for the tropospheric errors. By such a mapping matrix, the unknown parameters are mapped into the space of the measured tracking errors.

Since the ionospheric error depends on the actual condition of the ionosphere along the path of the carrier signals, the ionospheric error is advantageously determined for each satellite individually. In contrast to the estimation of the ionospheric error, the estimation of the tropospheric error is performed in the direction of the zenith and projected into the actual slant direction of the tracked satellite.

The phase tracking errors supplied by the phase extractors can also be verified for consistency. The verification can be performed by means of a weighted sum of squared error statistics that is computed from the range residuals and the inverse weighting matrix. If the ranges between the actual position of the receiver and the satellites assume improbable values an error detection signal or an error correction signal can be generated.

For avoiding that the initial phase biases and integer ambiguities of the phase tracking signals must be estimated, the phases are tracked individually upon initialization of the receiver and the operation of the receiver is switched into vector tracking, once the number of locked phases is sufficient for vector tracking.

Since the ionospheric delay depends on the frequency of a particular carrier signal, the ionospheric dispersion is advantageously corrected before the vector tracking is performed, in particular if a broad frequency band is associated with the carrier signal.

The ionospheric dispersion within the frequency band of a particular carrier signal can be corrected by estimating the total electron content by the combination of code measurements from at least two frequencies and by determining the ionospheric delays for a number of frequencies within the frequency band of the particular carrier signal. The ionospheric delays can then be transformed into a phase shift in the frequency domain and the ionospheric dispersion can be corrected by applying the conjugate of the phase shift to associated frequency components of the received signal. This approach results in a correct compensation of the ionospheric dispersion but requires relative high computational resources.

The need for computational resources can be reduced by estimating the total electron content, by combining code measurements from at least two frequencies and by retrieving the phase shift from a look-up table containing the phase shift depending on the total electron content.

For optimized results, the signals representing the clock difference, the tropospheric error, the ionospheric or the position difference or range difference are optimized with respect to the time constants of the error sources that are characteristic for the temporal variation. In particular, the clock difference signal is filtered with filter parameters optimized with respect to the time constant of the oscillators, the tropospheric signal is filtered with filter parameters optimized to the actual atmospheric conditions, the ionospheric signal is filtered with filter parameters optimized to the actual ionospheric activity and the position difference or range difference signal is filtered with filter parameters optimized to the receiver dynamics.

Further advantages and properties of the present invention are disclosed in the following description, in which exemplary embodiments of the present invention are explained in detail based on the drawings:

Figure 1        shows a global satellite navigation system and a receiver for the global satellite navigation system;

Figure 2        is a functional diagram of a multi-carrier phase locked loop with multi-frequency phase estimation and ionospheric drift elimination;

Figure 3        illustrates the benefit of joined tracking of L1, E5a und E5b phase measurements;

Figure 4        is a functional diagram of a vector phase locked loop with satellite coupling and with filtering of position, clock and tropospheric drift;

Figure 5        illustrates the benefit of joined tracking of carrier phases of all visible satellites;

Figure 6        shows an example of carrier to noise power variations due to amplitude scintillations;

Figure 7        demonstrates the reduction of carrier tracking error by joined satellite tracking in case of the carrier to noise power variation shown in Figure 6;

Figure 8 — demonstrates the accuracy of an ionospheric drift estimation for enhanced carrier phase noise and multipath on L1 and E5 using three-frequency geometry-free ionosphere-preserving linear combinations;

Figure 9 — is a functional diagram of a vector phase locked loop using multiple carrier signals of a single satellite;

Figure 10 — is a functional diagram of a vector phase locked loop using multiple carriers of multiple satellites;

Figure 11 — is functional diagram of an extended vector phase locked loop using multiple carriers of multiple satellites and an orthogonal projection for separating various drift parameters;

Figure 12 — demonstrates the tracking performance of the vector phase locked loop shown in Figure 9 in case of the random jamming pattern contained in Table 2;

Figure 13 — demonstrates the performance of the vector phase locked loop shown in Figure 9 in case of the jamming pattern contained in Table 3;

Figure 14 to 19 — demonstrate the tracking performance of the vector phase locked loop from Figure 10 during ionospheric scintillations;

Figure 20 — demonstrates the performance of tracking ionospheric delay drifts with the extended vector phase locked loop from Figure 11 during severe amplitude scintillations;

Figure 21 — demonstrates the performance of tracking the position drift with the extended vector phase locked loop from Figure 11 during severe amplitude scintillations;

Figure 22 — is a functional diagram of an equivalent circuit for the ionospheric dispersion;

Figure 23 to 26 — illustrate the effect of the ionospheric dispersion on a binary phase shift key signal;

Figure 27 and 28 — illustrate the effect of ionospheric dispersion on an alternating binary offset carrier signal;

Figure 29 — illustrates the effect of the ionospheric dispersion on the result of a correlator;

Figure 30 — is a diagram containing the phase change at a phase locked loop output in dependency of the total electron content;

Figure 31 — illustrates the tracking performance of the phase locked loop from Figure 10 in case of a phase jump of a satellite clock;

Figure 32 — demonstrates the performance of phase locked loop from Figure 10 in case of an erroneous weighting matrix;

Figure 33 — illustrates the detection of an erroneous weighting matrix from an amplification of the weighted sum of squared errors;

Figure 34 and 35 — illustrate the dependency of the amplification of the weighted sum of square errors on the amplification factor of tracked phase; and

Figure 36 — illustrates the detection of a carrier phase multipath from an amplification of the weighted sum of squared errors during severe ionospheric scintillations.

In the following, various embodiments are described in detail:

## 1. Introduction

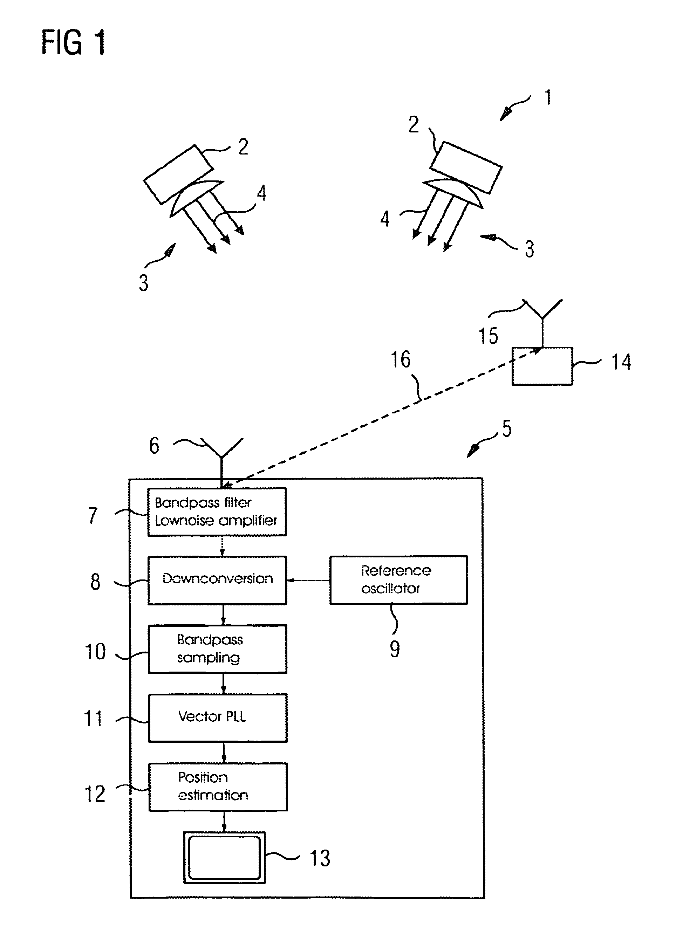

Figure 1 shows a global satellite navigation system 1, which comprises satellites 2 orbiting around the earth and emitting navigation signals 3 modulated on a number of carrier signals 4. The navigation signals 4 are received by a mobile navigation device 5 via an antenna 6. The antenna 6 is connected to a band pass filter and low noise amplifyer 7, in which the received signal is sampled and amplified. In a subsequent down converter 8 that is connected to the band pass filter and low noise amplifyer 7 and to a reference oscillator 9 the received signal is converted to lower frequencies using the oscillating signal from the reference oscillator 9. Then the signal is passing a band pass and sampling unit 10, in which the analog signal is sampled. The sampled signal is then passed to a vector Phase Looked Loop 11 ( = PLL) where the carrier signals 4 are tracked. The vector phase looked loop 11 is followed by a position estimation unit 12 in which the actual possition of the navigation device 5 is determinded. For results of the possition estimation is displayed on a monitoring device 13.

It should be noted that the position of the navigation device 5 is generally determined with respect to a base station 14 that receives the satellite signals 3 by an antenna 15. A base line 16 is the distance between the naviagation device 5 and the reference station 14. The reference station 14 can also be used to determinde various error sources since the position of the referenced station 14 is known.

The global navigation Galileo provides precise carrier phase measurements on four frequencies. Linear combinations of the carrier signals 4 can be efficiently computed. These combinations considerably simplify the phase integer ambiguity resolution due to a large combined wavelength [1].

However, multi-frequency linear combinations are sensitive to ionospheric scintillations: Deep fades in signal amplitude of more than 20 dB and an increased phase noise level [3][4] might result in frequent loss of lock of the carrier tracking loops. Moreover, carrier phase multipath or interference from jammer can affect one or more frequency bands [5].

Deep amplitude fades have a duration of less than one second and do not affect more than three satellites 2 simultaneously. Amplitude fades of more than 20 dB on L1 can be easily compensated by an E5 signal at 40 dB/Hz. Ionospheric phase scintillations are heavily correlated and may affect all carrier signals of a single satellite simultaneously, but not all carrier signals 4 of all satellites 2.

In the following, various embodiments of the vector PLL 11 will be decribed in more detail. These embodiment allow for joint tracking of all carrier signals 4 of a single satellite 2 or a plurality of satellites 2. The joint tracking allows for the compensation of the errors that are caused by ionospheric scintillations. Before the embodiments are decribed in more detail some facts regarding the ionosphere and troposhere are set forth.

GPS orbits are made available by the International GNSS Service (IGS) with a real-time accuracy of 10 cm (ultra-rapid, half predicted) which is substantially better than the broadcast orbits (160 cm accuracy). The IGS orbits are a combination of the orbits from various IGS Analysis Centers (e.g. the Center for Orbit Determination in Europe (CODE) in Berne and the Geoforschungszentrum (GFZ) in Potsdam) which process the measurements from more than 100 reference stations in the world. The IGS also publishes the satellite clock offsets with a real-time accuracy of 5 ns.

The ionosphere extends from 80 km to 1000 km altitude and delays signals in the L-band by up to 35 m in vertical direction and by up to 100 m for 5° elevation. This delay shows substantial temporal and spatial fluctuations during solar activity, e.g. gradients in slant delay of up to 425 mm/km were observed by Pullen, Park and Enge in [14] over baselines of 40 km - 100 km during the ionospheric storm on November 20, 2003. As the ionospheric delay is dispersive, it can be estimated or eliminated using measurements on two or more frequencies.

The troposphere represents the lowest layer of the atmosphere with a height of 8 km at the poles and of 18 km at the equator. 90 % of the neutral gases and almost the complete water vapor of the atmosphere are located in the troposphere which causes a non-dispersive delay of up to 2.6 m in zenith direction. The stratospheric and mesospheric delays are significantly smaller and generally mapped to the tropospheric delay. It is split into a dry component which contributes 90 % to the delay and can be well modeled, and into a wet component which contributes only 10 % to the delay but varies significantly as a function of time and location. The tropospheric delay is given by integration of the refractivity index, i.e.

$$T_u^k = \frac{1}{c} \cdot \left( \int_{\gamma_{cur}} n(l)\,dl - \int_{\gamma_{dir}} dl \right)$$

$$= \frac{1}{c} \cdot \left( \int_{\gamma_{cur}} (n(l)-1)\,dl + \int_{\gamma_{cur}-\gamma_{dir}} dl \right), \tag{A}$$

where $c$ denotes the speed of light, $\gamma_{cur}$ and $\gamma_{dir}$ are the curved and direct paths between the reciever and the satellite, and $n(l)$ is the refractivity index. The first term in (A) represents the excess delay due to the slower propagation on the curved path, and the second term shows the geometric difference in path lengths. The evaluation of the integral requires a profile of the troposphere (temperature, pressure and humidity) from a radiosonde. Alternatively, the tropospheric delay can be approximated by

$$T_u^k = m_d(\theta) \cdot T_{u_{z,d}}^k + m_w(\theta) \cdot T_{u_{z,w}}^k, \qquad\qquad (B)$$

where $T_{u_{z,d}}^k$ and $T_{u_{z,w}}^k$ denote the dry and wet components of the zenith delay which are mapped by the obliquity factors $m_d$ and $m_w$ into slant delays based on the elevation angle $\theta$. The obliquity factors are larger than for the ionosphere, and amplify the tropospheric delays up to 26 m for 5° elevation. There exist a large variety of mapping functions, e.g. the Niell mapping function for the wet component which does not require any meteorological data and is given in [9] as

$$m_w(\theta) = \frac{1 + \dfrac{a}{1 + \dfrac{b}{1+c}}}{\sin(\theta) + \dfrac{a}{\sin(\theta) + \dfrac{b}{\sin(\theta)+c}}},$$

with *a*, *b* and *c* depending on the latitude of the receiver.

The multi-carrier vector phase locked loop allows for joined tracking of carrier phase from different satellites 2. It enables robust carrier tracking if some frequencies or a subset of visible satellites is affected by ionospheric scintillations, carrier phase multipath or interference from jammer.

The noise performance is evaluated for significant ionospheric scintillations with deep amplitude fades of more than 20 dB. These fades of short duration do not affect more than three satellites simultaneously and can be compensated from other satellites to maintain tracking. The ionospheric drift is estimated by a time-differenced geometry-free linear combination. It is eliminated before multi-frequency phase estimation to enable an ionosphere-free loop filter.

## 2. Embodiments with separate estimation of the ionospheric drift

### 2.1 Multi-Carrier Phase Locked Loop

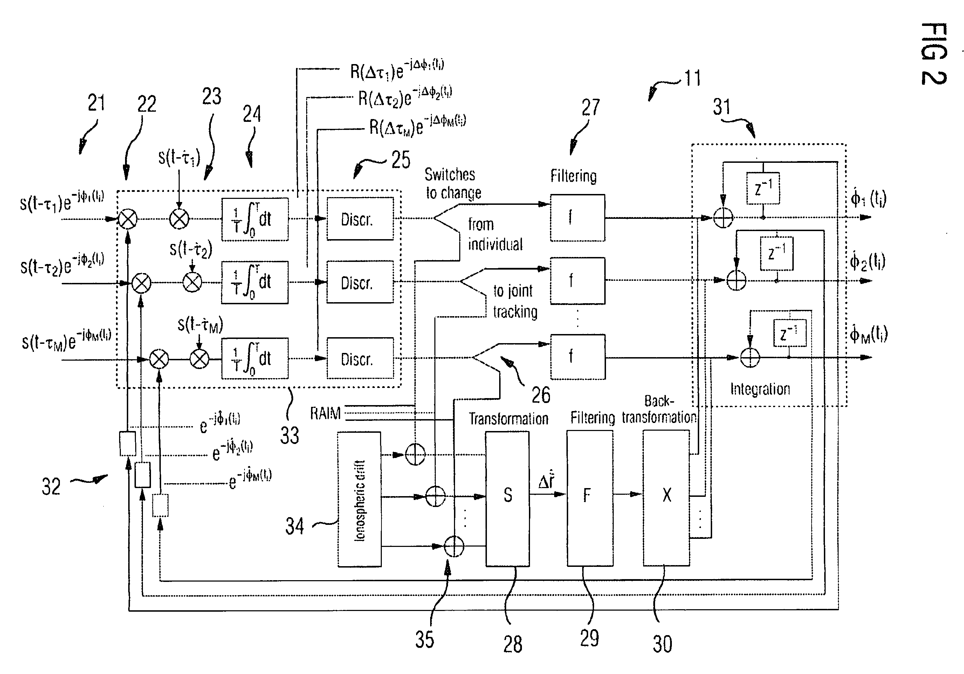

Today's GNSS receivers use independent PLLs for each carrier frequency. The reliability of carrier tracking can be improved by the multi-carrier vector PLL 11 that is shown in more detail in Figure 2.

Figure 2 shows a functional diagram of one embodiment of the vector PLL 11. At an input gate 21 the vector PLL 11 receives combined code and phase signals $s(t-\tau_m)\ e^{-j\phi m(t_i)}$, where $s(t-\tau_m)$ is the code signal, t the actual time, $\tau_m$ is the transmission time that the m-th carrier signal 4 needs for traveling from the satellite 2 to the navigation device 5, and $\varphi_m(t_i)$ is the phase of the carrier signal 4 that is sampled at time $t_i$.

The incoming signal is multiplied in a multiplier 22 by a signal $e^{-j\hat{\phi}_m(t_i)}$ and in subsequent multipliers 23 by $s(t - \hat{\tau}_m)$ that is supplied from a code discriminator that it not shown in Figure 2. The signals resulting from the multiplyer 23 is fed to integrators 24 which average the incoming signal over one a integration time T. The resulting signal $R(\Delta\tau_m)\ e^{-j\Delta\phi m(t_i)}$ is supplied to discriminators 25 that extract the input phase error signal $\Delta\varphi_m$.

Via switches 26, the phase error signal can either be directed to individual filters 27 or to a transformation unit 28 that transforms the input phase error signals into the possition domain for generating a range error signal $\Delta r$ that it filtered in a filter 29 and back transformed back in the phase domain by a back transformation unit 30 resulting in output error phase signals that can be supplied to an output integration unit 31.

The output integration unit 31 can also receive output error phase signals from the individual filters 27. At the output of the output integration unit 31 a corrected phase signal $\hat{\phi}_{m(t_i)}$ is generated and can be used as a control signal for numerically controlled oscillators 32 ( = NCO) that generate the signals supplied to the multipliers 22 that are a part of an extraction unit 33. Besides the multipliers 22, the extraction unit 33 further includes the multipliers 22 and 23 and the disciminators 24. The extraction unit 33 is the functional unit that extracts the input phase error signals from the incoming combined code and phase signal.

If the vector PLL 11 is initialized, the switches 26 are brought in the position, in which the input phase error signals are directed to the individual filters 29 and the tracking loops are run independently. The ionospheric delay is not removed and appears in the tracked phases at the outputs of the integration unit 31. Then, the joint tracking is turned on by bringing the switches 26 in a position, in which the input phase error signals are supplied to the transformation unit 28. The input phase error signal at the discriminator output are partially affected by the ionosphere, i.e. by the change in the ionospheric delay between the switching and the current epoch. This shift of the ionospheric delay is estimated from a ionospheric drift estimator 34 and is eliminated before the multi-carrier combining via substrators 35. The initialization of the PLL 11 from Figure 2 thus reduces the absolute ionospheric delay estimation to a time-differenced delay estimation.

The vector PLL 11 of Figure 2 and any other embodiments may furthermore also be provided with a unit for Weighted Receiver Autonomous Integrity Monitoring ( = RAIM) for the detection and inclusion of measurements that are affected by anomalies of the satellites 2.

The received carrier phase $\phi_{u.m}^k(t_i)$ from satellite $k$ on frequency $m$ for reciver $u$ (i.e. navigation device5 or base station 14) at time $t_i$ is modeled as

$$\lambda_m \phi_{u.m}^k(t_i) = r_u^k(t_i) + \delta r_u^k(t_i) + c\left(\delta\tau_u(t_i) - \delta\tau^k(t_i)\right) - q_{1m}^2 I_u^k(t_i) + T_u^k(t_i)$$

$$+ \lambda_m N_{u.m}^k + b_{u.m}^k + \varepsilon_{u.m}^k(t_i), \tag{1}$$

with the wavelength $\lambda_m$, the range $r_u^k$ between satellite $k$ and reveiver u, the range error $\delta r_u^k$ due to imperfect orbital knowledge, the receiver clock offset $c\delta\tau_u$, the satellite clock offset $c\delta\tau^k$, the frequency ratio $q_{1m} = f_1/f_m$, the ionospheric delay $I_u^k$ on E1, the tropospheric delay $T_u^k$, the integer ambiguities $N_{u.m}^k$, the real-valued bias $b_{u.m}^k$ and the phase noise $\varepsilon_{u.m}^k(t_i)$ including multipath and ionospheric scintillations.

The carrier tracking error at the (normalized) discriminator output represents time-differenced phase measurements that are obtained from equation (1) as

$$\lambda_m \Delta\phi_{u.m}^k = \Delta r_u^k + \Delta\delta r_u^k + c\Delta\delta\tau_u - q_{1m}^2 \Delta I_u^k + \Delta T_u^k + \Delta\varepsilon_{u.m}^k, \tag{2}$$

which are free of biases and integer ambiguities. If the ionospheric drift is put on the left side, all remaining parameters except phase noise are frequency independent, i.e.

$$\lambda_m \Delta\tilde{\phi}_{u.m}^k = \lambda_m \Delta\phi_{u.m}^k + q_{1m}^2 \Delta I_u^k. \tag{3}$$

The rest of this section restricts to a single reciever and single satellite so that the respective indices are omitted. The multi-frequency weighted least-square phase estimator combines the measurements of (3) to

$$\lambda\Delta\tilde{\phi} = \left(\mathbf{x}^T \Sigma^{-1} \mathbf{x}\right)^{-1} \mathbf{x}^T \Sigma^{-1} \cdot \begin{bmatrix} \lambda_1 \Delta\tilde{\phi}_1 \\ \lambda_2 \Delta\tilde{\phi}_2 \\ \lambda_3 \Delta\tilde{\phi}_3 \end{bmatrix}, \tag{4}$$

with

$$\mathbf{x} = [1,\ldots,1]^T$$

$$\Sigma = \begin{bmatrix} \sigma^2_{\Delta\tilde{\phi}_1} & \sigma_{\Delta\tilde{\phi}_{12}} & \cdots \\ \sigma_{\Delta\tilde{\phi}_{12}} & \sigma^2_{\Delta\tilde{\phi}_2} & \cdots \\ \vdots & \vdots & \ddots \end{bmatrix}.$$

The variances in the weighting matrix $\Sigma$ are chosen as the variances of the normalized Costas discriminator output [7], i.e.

$$\sigma^2_{\Delta\tilde{\phi}_m} = \frac{1}{2C_m/N_0 T} \cdot \left(1 + \frac{1}{2C_m/N_0 T}\right) + \sigma^2_{\delta\phi_m}, \qquad (5)$$

with the integration time $T$. The variance $\sigma^2_{\delta\phi_m}$ has been included for phase scintillations and colored oscillator noise.

The carrier tracking error variance of the vector PLL 11 in Figure 2 can be derived by a generalization of the traditional single carrier PLL [7] analysis: For a linear first order loop, the estimated phase $\lambda\Delta\hat{\phi}(t_{i+1})$ is given recursively by:

$$\lambda\Delta\hat{\phi}(t_{i+1}) = \lambda\Delta\hat{\phi}(t_i) + 4B_L T \cdot \left(\mathbf{x}^T \Sigma^{-1} \mathbf{x}\right)^{-1} \mathbf{x}^T \Sigma^{-1}$$

$$\cdot \left( \begin{bmatrix} \lambda_1 \Delta\tilde{\phi}_1(t_{i+1}) \\ \lambda_2 \Delta\tilde{\phi}_2(t_{i+1}) \\ \lambda_3 \Delta\tilde{\phi}_3(t_{i+1}) \end{bmatrix} - \mathbf{x} \cdot \lambda\Delta\hat{\phi}(t_i) \right)$$

$$= (1 - 4B_L T)\lambda\Delta\hat{\phi}(t_i) + 4B_L T\left(\mathbf{x}^T \Sigma^{-1} \mathbf{x}\right)^{-1}$$

$$\cdot \mathbf{x}^T \Sigma^{-1} \begin{bmatrix} \lambda_1 \Delta\tilde{\phi}_1(t_{i+1}) \\ \lambda_2 \Delta\tilde{\phi}_2(t_{i+1}) \\ \lambda_3 \Delta\tilde{\phi}_3(t_{i+1}) \end{bmatrix}. \qquad (6)$$

For a single carrier PLL [7], it can be simplified to

$$\lambda\Delta\hat{\phi}(t_{i+1}) = \lambda\Delta\hat{\phi}(t_i) + 4B_L T\left(\lambda\Delta\tilde{\phi}(t_{i+1}) - \lambda\Delta\hat{\phi}(t_i)\right)$$

$$= (1 - 4B_L T)\lambda\Delta\hat{\phi}(t_i) + 4B_L T\lambda\Delta\tilde{\phi}(t_{i+1}).$$

In steady state, $\sigma_{\Delta\hat{\phi}(t_i+1)} = \sigma_{\Delta\hat{\phi}(t_i)}$, so that

$$\sigma_{\Delta\dot{\phi}}^{2} = \left(1 - 4B_L T\right)^2 \sigma_{\Delta\dot{\phi}}^{2} + \left(4B_L T\right)^2 \cdot \left(\mathbf{x}^T \mathbf{\Sigma}^{-1} \mathbf{x}\right)^{-1}, \tag{7}$$

Solving (7) for $\sigma_{\Delta\dot{\phi}}^{2}$ yields

$$\sigma_{\Delta\dot{\phi}}^{2} = \frac{\left(4B_L T\right)^2}{1 - \left(1 - 4B_L T\right)^2} \cdot \left(\mathbf{x}^T \mathbf{\Sigma}^{-1} \mathbf{x}\right)^{-1}$$

$$= \frac{2B_L T}{1 - 2B_L T} \cdot \left(\mathbf{x}^T \mathbf{\Sigma}^{-1} \mathbf{x}\right)^{-1}. \tag{8}$$

The first factor describes the loop filter and the second one refers to the weighted least-square phase estimator. Equation (9) simplifies for a single carrier PLL to the well-known expression

$$\sigma_{\Delta\dot{\phi}}^{2} = \frac{B_L}{C/N_0 (1 - 2B_L T)} \cdot \left(1 + \frac{1}{2C/N_0 T}\right). \tag{9}$$

The use of higher order loops with optimum transfer function and loop bandwidths results in an equal performance [7].

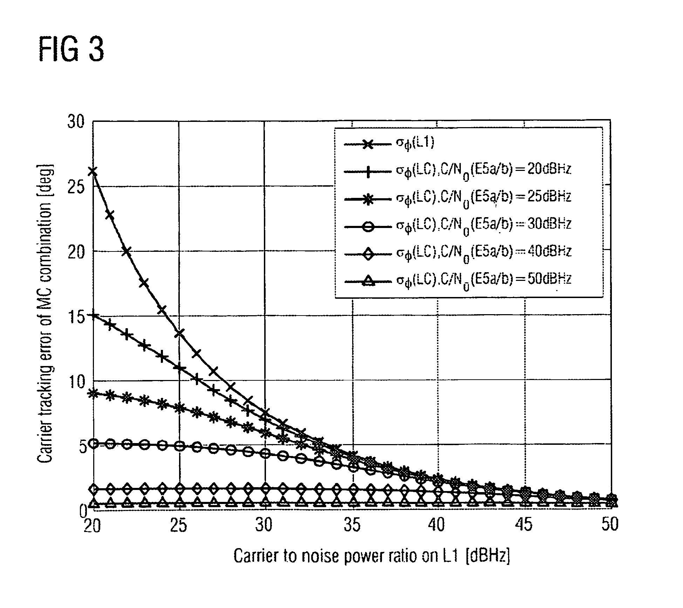

Figure 3 shows the carrier tracking error of the multi-carrier (= MC) combination as a function of the carrier to noise power ratio on L1 for $B_L$ = 10 Hz and $T$ = 20 ms. The pure thermal noise performance is analysed, i.e. colored oscillator noise and (correlated) phase scintillations are not taken into account. The tracking error of independent L1 carrier tracking is shown as reference. It can be substantially reduced by joint tracking and a sufficiently high carrier to noise power ratio on E5a/b. In the worst-case of $C/N_0$ = 20 dB/Hz on all frequencies, the carrier tracking error on L1 is still reduced from 26° to 15° by the MC combination.

## 2.2 Vector Phase Locked Loop

Phase scintillations are heavily correlated on different frequencies [3][4][10] and reduce the benefit of a MC-PLL. However, scintillation patches do not affect all satellites 2 simultaneously [8] which motivates a vector PLL 11 for joint tracking of all satellites 2.

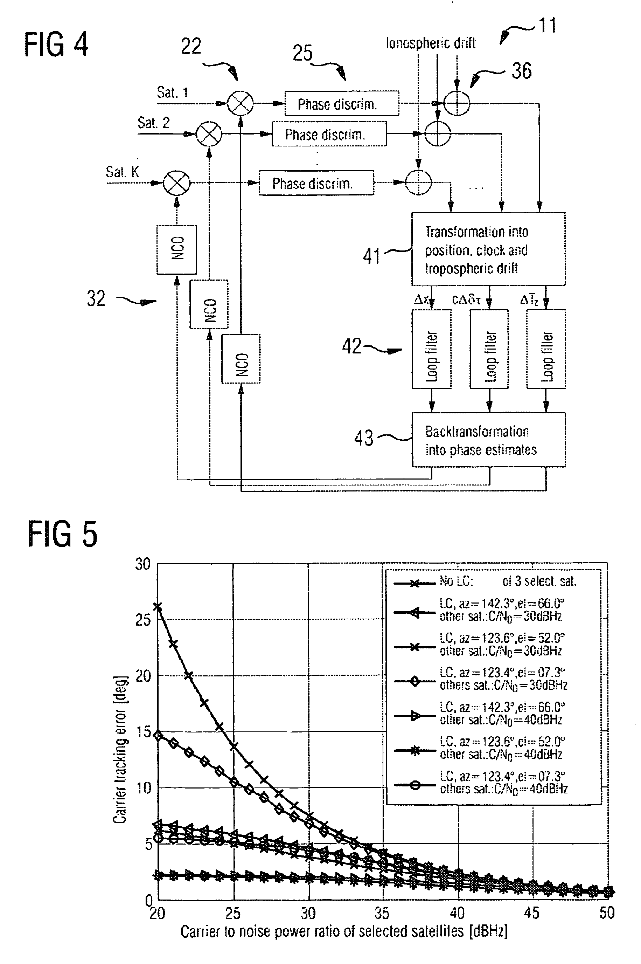

Figure 4 shows a further embodiment of the vector PLL 11. The vector PLL 11 depicted in Figure 4 provides joined tracking of $K$ satellites 2. To simplify matters, the representation in Figure 4 has been reduced to the most essential components of the embodiments. In particular, only one loop per satellite 2 is shown although the loop associated with a particular satellite 3 may also comprise a plurality of loops for the various carrier signals 3 of the particular satellite 2. As the embodiment shown in Figure 2, the embodiment depicted in Figure 4 may also be provided with a RAIM system for the detection of anomalies of the satellites 2.

The embodiment of the vector PLL 11 shown in Figure 4 has a transformation unit 41, a filter 42 and a back transformation unit 43, whose functionality differs form the functionality of the transformation unit 28, the filter 27 and the back transformation unit 29 of the embodiment from Figure 2.

In the vector PLL 11 of Figure 4, the carrier tracking errors of different satellites 2 are provided by the phase discriminators 25 and can be decomposed as in (2). The range difference is rewritten as

$$\Delta r_u^{\cdot k} = \mathbf{e}_u^{k,T}(t_i) \cdot \left( \mathbf{x}_u(t_i) - \mathbf{x}^k(t_i) \right)$$

$$- \mathbf{e}_u^{k,T}(t_{i-1}) \cdot \left( \mathbf{x}_u(t_{i-1}) - \mathbf{x}^k(t_{i-1}) \right)$$

$$= \mathbf{e}_u^{k,T}(t_i) \cdot \left( \mathbf{x}_u(t_i) - \mathbf{x}_u(t_{i-1}) \right)$$

$$- \mathbf{e}_u^{k,T}(t_i) \cdot \mathbf{x}^k(t_i) + \mathbf{e}_u^{k,T}(t_{i-1}) \cdot \mathbf{x}^k(t_{i-1})$$

$$+ \left( \mathbf{e}_u^{k,T}(t_i) - \mathbf{e}_u^{k,T}(t_{i-1}) \right) \cdot \mathbf{x}_u(t_{i-1}), \tag{10}$$

with the satellite to receiver direction vector $\mathbf{e}_u^k(t_i)$, the receiver position $\mathbf{x}_u(t_i)$ and the satellite position $\mathbf{x}^k(t_i)$. The first term in (10) contains the parameter of interest, i.e. the change in receiver position. The second and third term can be put on the left side as they refer to the known satellite position. The last term includes the receiver position of the previous epoch multiplied by the change of the direction vector. This term can not be neglected but it is rather insensitive to errors in $\mathbf{x}_u(t_{i-1})$ due to the small weighting coefficient. The last term is equally put on the left side as its parameters are known with sufficient accuracy.

The tropospheric delay is split up into a wet and dry delay whereas the latter one is generally computed from a model. The drift of the wet delay is written as

$$\Delta T = m_w(t_i) \cdot T_z(t_i) - m_w(t_{i-1}) T_z(t_{i-1})$$

$$= m_w(t_i) \cdot \left( T_z(t_i) - T_z(t_{i-1}) \right)$$

$$+ \left( m_w(t_i) - m_w(t_{i-1}) \right) \cdot T_z(t_{i-1}), \tag{11}$$

with the Niell mapping function $m_n(t_i)$ [9] and the tropospheric zenith delay $T_2(t_i)$. The drift of the wet zenith delay is a tracked parameter similar to the position drift and clock drift.

The carrier tracking errors of $K$ satellites are given from (2), (3), (11) and (12) in matrix-vector notation by

$$\begin{bmatrix} \lambda \Delta \tilde{\varphi}^1 \\ \vdots \\ \lambda \Delta \tilde{\varphi}^K \end{bmatrix} = \underbrace{\begin{bmatrix} \mathbf{H}_1 & \mathbf{H}_2 & \mathbf{H}_3 \end{bmatrix}}_{X} \cdot \begin{bmatrix} \Delta \mathbf{x} \\ c\Delta\delta\tau \\ \Delta T_z \end{bmatrix} + \tilde{\varepsilon}. \tag{12}$$

The transformation of code delay tracking errors into position drifts has been analysed in [6] and it has been applied to the phase tracking error in [11][12]. If the drift of both clock and tropospheric zenith delay are included, the weighted least square estimates are given by

$$\begin{bmatrix} \Delta \hat{\mathbf{x}} \\ c\Delta\delta\hat{\tau} \\ \Delta \hat{T}_z \end{bmatrix} = \left( \mathbf{X}^T \mathbf{\Sigma}^{-1} \mathbf{X} \right)^{-1} \mathbf{X}^T \mathbf{\Sigma}^{-1} \begin{bmatrix} \lambda \Delta \tilde{\varphi}^1 \\ \vdots \\ \lambda \Delta \tilde{\varphi}^K \end{bmatrix}, \tag{13}$$

where the discriminator output vector can be generalized to multiple frequencies. The weighting matrix E is computed from the variances of the normalized discriminator outputs of (5) with satellite-dependant carrier to noise power ratios and phase scintillation variances.

The tracked phase $\lambda\Delta\varphi(t_{i+1})$ is derived by generalization of the single satellite analysis [7] and is computed

recursively:

$$\lambda \Delta \hat{\varphi}(t_{i+1}) = \lambda \Delta \hat{\varphi}(t_i) + \mathbf{XF} \left( \mathbf{X}^T \boldsymbol{\Sigma}^{-1} \mathbf{X} \right)^{-1} \mathbf{X}^T \boldsymbol{\Sigma}^{-1}$$

$$\cdot \left( \begin{bmatrix} \lambda \Delta \tilde{\varphi}^1(t_{i+1}) \\ \vdots \\ \lambda \Delta \tilde{\varphi}^K(t_{i+1}) \end{bmatrix} - \lambda \Delta \hat{\varphi}(t_i) \right), \tag{14}$$

where $\mathbf{F}^{5 \times 5}$ denotes the loop filter in matrix form. It is a diagonal matrix with

$\mathbf{F}_{nn} = 4 B_L^{(n)} T^{(n)}$ , i.e. loop bandwidth and integration time can be adapted to the filtered parameter: The position coordinate loop filters are characterized by a bandwidth of $B_L^{\{1,\ldots,3\}}$ , , the clock drift filter by $B_L^{(4)}$ and the

tropospheric drift filter by $B_L^{(5)}$ . .

The recursive estimator of (15) is rewritten as

$$\lambda \Delta \hat{\varphi}(t_{i+1}) = \left( \mathbf{1} - \mathbf{XF} \left( \mathbf{X}^T \boldsymbol{\Sigma}^{-1} \mathbf{X} \right)^{-1} \mathbf{X}^T \boldsymbol{\Sigma}^{-1} \right) \lambda \Delta \hat{\varphi}(t_i)$$

$$+ \mathbf{XF} \left( \mathbf{X}^T \boldsymbol{\Sigma}^{-1} \mathbf{X} \right)^{-1} \mathbf{X}^T \boldsymbol{\Sigma}^{-1} \begin{bmatrix} \lambda \Delta \tilde{\varphi}^1(t_{i+1}) \\ \vdots \\ \lambda \Delta \tilde{\varphi}^K(t_{i+1}) \end{bmatrix}. \tag{15}$$

In contrast to the MC-PLL of Figure 2, no closed form expression could be found for the covariance matrix of $\lambda \Delta \hat{\varphi}(t_i)$.

Figure 5 illustrates the benefit of joined tracking of carrier phase of all visible satellites. Figure 5 shows in particular the thermal noise performance of a VPLL if the satellites 2 in northwestern direction (3 out of 8 visible satellites) are affected by a reduced carrier to noise power ratio of {20...40} dB/Hz. A Monte-Carlo simulation of $\Sigma_{\dot{\varphi}}$ has been

performed for $B_L^{(n)} = 10 \text{ Hz}$ and $T^{(n)} = 20$ ms $\forall n$. The VPLL significantly reduces the carrier tracking error and enables reliable tracking of all satellites 2 even if three satellites 2 suffer from $C/N_0 = 20$ dB/Hz.

Ionospheric scintillations cause frequent variations in the signal amplitude and require a temporal adaption of $\Sigma(C/N_0(t_i))$ in (16). Amplitude scintillations are commonly characterized by a Nakagami distribution [3] and the $S_4$ parameter which denotes the standard deviation of received signal power normalized to the mean received power.

The scintillation sampling model of [4] has been used for data generation and is briefly introduced:

First, a vector of independent zero-mean Gaussian samples of unit variance is computed. A set of Butterworth filters is then applied to introduce time correlation and the desired power spectral density of the form $P_\phi(f) = K \cdot f^p$ with a unitless slope $p = \{2,...,3\}$. The coefficients of Butterworth filters [4] are chosen to best fit the experimental data of [10]. After shaping, the samples are transformed from a Gaussian to a Gamma distribution. The obtained time series represent intensity scintillation variations.

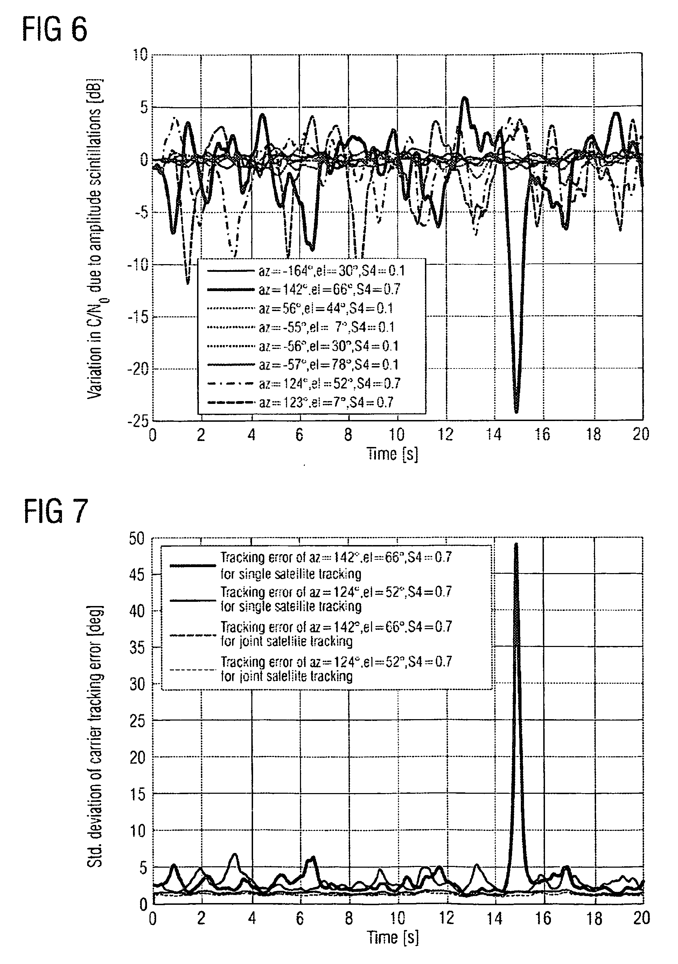

The carrier to noise power variations have been generated for each satellite independently and are shown in Figure 6. Figure 6 shows various carrier to noise power variations due to amplitude scintillations. The carriers signals 4 of five satellites 2 are affected by scintillations with $S_4 = 0.1$ and three satellites 2 have carrier signals 4 that are affected by scintillations with $S_4 = 0.7$. The high $S_4$ value of the satellites 2 in northwestern direction results in power fades of up to 25 dB.

Figure 7 shows the carrier tracking error of two critical satellites ($S_4 = 0.7$) using the joint phase estimator of (16). In particular the reduction of carrier tracking error by joint satellite tracking is shown. The weighting matrix $\Sigma$ has been adapted continuously to take amplitude variations into account. The loop bandwidth has been chosen as

$B_L^{(n)} = 10$ Hz $\quad \forall n$; the integration time is fixed to 20 ms. The standard deviation of single satellite carrier tracking is shown as a reference. Joint satellite tracking reduces the tracking error to 2 degrees even during deep amplitude fades.

A second scenario, in which all satellites 2 are affected by significant amplitude scintillations ($S_4 = 0.7$), shows that the standard deviation of vector PLL tracking errors remains below 7.5° degrees for all satellites which leaves a factor of two to the typical tracking threshold [7] of $\sigma_\phi = 15$°.

## 2.3 Estimation of ionospheric drift

In the embodiments of Figure 2 and Figure 4, the ionospheric drift is eliminated before the transformation into position domain, i.e. the loop filter is not affected by variations of the ionospheric delay. The ionospheric drift can be estimated by a three-frequency time-differenced linear combination

$$\lambda_{LC} = \sum_{m=1}^{3} \alpha_m \lambda_m$$

which is geometry-free (GF) and ionosphere-preserving (IP). The time-differenced criterion eliminates biases and integer ambiguities. A geometry-free combination is independent of the range and removes all non-dispersive error sources, i.e. tropospheric delays, clock biases and orbital errors. Thus, the ionospheric drift and phase noise including carrier phase multipath are the only remaining parameters. The weighting coefficients $\alpha_1$, $\alpha_2$, $\alpha_3$ of a geometry-free combination are constrained by

$$\sum_{m=1}^{3} \alpha_m = 0. \tag{16}$$

The condition of preserving the ionosphere is written as

$$\sum_{m=1}^{3} \alpha_m q_{1m}^2 = 1. \tag{17}$$

The third degree of freedom is used to minimize the variance of the linear combination, i.e.

$$\sigma_{\phi_{LC}}^2 = \min_{\alpha_1, \alpha_2, \alpha_3} \sum_{m=1}^{3} \alpha_m^2 \sigma_{\phi_m}^2. \tag{18}$$

Table 1 shows the weighting coefficients and noise amplifications for $\sigma_{\phi_m} = r_m \cdot \sigma_{\phi 0}$.

If both the E5a and E5b band suffer from an increased noise level, the use of multiple epochs is required to reduce the noise level of the linear combination. The ionospheric drift can be estimated from N epochs by

$$\Delta \hat{I} = \frac{1}{N-1} \cdot \sum_{i=1}^{N-1} \frac{\phi_{GF.IP}(t_{i+1}) - \phi_{GF.IP}(t_i)}{\tau}$$

$$= \frac{1}{(N-1) \cdot \tau} \cdot \left( \phi_{GF.IP}(t_N) - \phi_{GF.IP}(t_1) \right), \tag{19}$$

with the measurement rate $1/\tau$. The standard deviation of this ionospheric drift estimator is given by

$$\sigma_{\Delta i} = \frac{\sqrt{2}}{(N-1)\tau} \cdot \sigma_{LC}. \tag{20}$$

The drawback of the estimator in (20) is the consideration only of the first and last epoch. An improved estimator takes all epochs into account and is given by a linear polynomial that minimizes the MMSE, i.e.

$$\min_{\hat{I}_0, \Delta\hat{I}} \frac{1}{N} \sum_{i=1}^{N} \left( \phi_{GF.IP}(t_i) - \left( \hat{I}_0(t_0) + \Delta\hat{I} \cdot (t_i - t_0) \right) \right)^2, \tag{21}$$

with the solution

$$\hat{I}_0(t_0) = \frac{\sum_{i=1}^{N}(t_i - t_0)^2 \sum_{i=1}^{N}\phi_{GF.IP}(t_i)}{N\sum_{i=1}^{N}(t_i - t_0)^2 - \left(\sum_{i=1}^{N}(t_i - t_0)\right)^2}$$

$$-\frac{\sum_{i=1}^{N}(t_i - t_0)\sum_{i=1}^{N}\phi_{GF.IP}(t_i) \cdot (t_i - t_0)}{N\sum_{i=1}^{N}(t_i - t_0)^2 - \left(\sum_{i=1}^{N}(t_i - t_0)\right)^2}, \tag{22}$$

and

$$\Delta\hat{I} = \frac{N\sum_{i=1}^{N}\phi_{GF.IP}(t_i) \cdot (t_i - t_0)}{N\sum_{i=1}^{N}(t_i - t_0)^2 - \left(\sum_{i=1}^{N}(t_i - t_0)\right)^2}$$

$$-\frac{\sum_{i=1}^{N}(t_i - t_0)\sum_{i=1}^{N}\phi_{GF.IP}(t_i)}{N\sum_{i=1}^{N}(t_i - t_0)^2 - \left(\sum_{i=1}^{N}(t_i - t_0)\right)^2}. \tag{23}$$

The variance of this ionospheric drift estimator is given by

$$\sigma_{\Delta i} = \sigma_{LC} \cdot \sqrt{\sum_{j=1}^{N}\left(\frac{N \cdot (t_j - t_0) - \sum_{i=1}^{N}(t_i - t_0)}{N\sum_{i=1}^{N}(t_i - t_0)^2 - \left(\sum_{i=1}^{N}(t_i - t_0)\right)^2}\right)^2}. \tag{24}$$

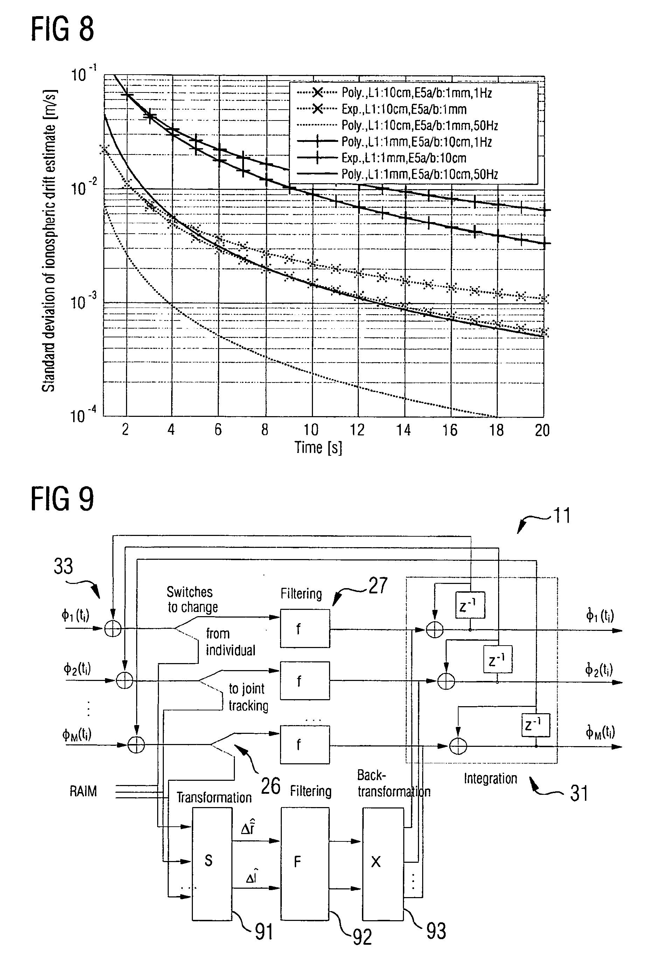

Figure 8 demonstrates the accuracy of ionospheric drift estimation for enhanced carrier phase noise and multipath on L1 and E5 using three-frequency geometry-free, ionosphere-preserving linear combinations. In particular, Figure 8 shows a comparison of the ionospheric drift estimators from (20) and (24) for two scenarios: In the first one, the L1 phase noise is increased to 10 cm and in the second one, the E5a/b phase noise is assumed to be 10 cm. Sampling rates of both 1 Hz and 50 Hz have been considered. The first estimator depends only on the complete measurement period and does not benefit from a higher measurement rate. The polynomial approach depends on $\tau$ and reduces $\sigma_{\Delta i}$ by up to one order of magnitude compared to the expectation based estimator. The ionospheric drift can be estimated with an accuracy of 1 mm within 12 s even if both E5a and E5b measurements suffer from a phase noise level of 10 cm.

### 3. Embodiments with integrated estimation of the ionospheric delay

In this section, three further embodimenst of the vector PLL 11 are presented. The first one is a Multi-Carrier, Single-Satellite Vector-PLL (MC-SS-VPLL) which couples the phases by the range (including all non-dispersive errors) between the receiver and the satellite and by the ionospheric delay. This VPLL does not require any a priori knowledge about the geometry. The second type is a Multi-Carrier, Multi-Satellite Vector-PLL (MC-MS-VPLL) which reduces the tracking errors of the first type and takes the geometry into account. The third type is an extended MC-MS-VPLL where the tracking errors of the discriminators are decomposed into drifts of position, receiver clock, ionospheric and tropospheric delays by orthogonal projections. Each of these four parameters is tracked independently which enables an optimization of the loop filters w.r.t. the dynamics of these parameters. All types of VPLLs are initialized by independent loops to avoid the estimation of integer ambiguities and biases.

### 3.1 The Multi-Carrier, Single-Satellite Vector PLL

The predetection result after carrier wipe-off and correlation has been derived by Van Dierendonck in [7]. Its I and Q components are given by

$$Z_I(t_i) = \sqrt{2\frac{C}{N_0}T} \cdot sinc(\pi\Delta fT) \cdot R(\Delta\tau(t_i)) \cdot D(t_i) \cdot \cos(\Delta\phi(t_i)) + \eta_I(t_i) \qquad (25)$$

$$Z_Q(t_i) = \sqrt{2\frac{C}{N_0}T} \cdot sinc(\pi\Delta fT) \cdot R(\Delta\tau(t_i)) \cdot D(t_i) \cdot \sin(\Delta\phi(t_i)) + \eta_Q(t_i), \qquad (26)$$

with the carrier to noise power ratio $C/N_0$, the integration time $T$, the frequency offset $\Delta f$, the correlation result $R(\Delta\tau(t_i))$ between the incoming code and the reference code, the navigation data bit $D(t_i)$, the difference $\Delta\phi(t_i)$ between the incoming phase and the reference phase, and the noise term $\eta_{\{I,Q\}}(t_i)$. A lock of code delay and frequency is assumed, i.e. $\Delta\tau = 1$ and $\Delta f = 1$. The carrier tracking error is extracted from the predetection result by a phase discriminator, e.g. the classical Costas' product discriminator that is independent of the data bit and described by Kaplan and Hegarty in [15] as

$$\Delta\phi_{prod}(t_i) = \frac{1}{C/N_0 T} \cdot Z_I(t_i)Z_Q(t_i) = \Delta\phi(t_i) + \eta_{\phi_{prod}}(t_i). \qquad (27)$$

For high and low SNR, the maximum likelihood estimator is the four-quadrant arctangent discriminator [15], i.e.

$$\Delta\phi_{atan}(t_i) = atan_2(Z_Q(t_i), Z_I(t_i)) = \Delta\phi(t_i) + \eta_{\phi_{atan}}(t_i). \qquad (28)$$

Today's implementations of discriminators suffer from a non-linearity for large tracking errors that causes an additional bias in (1). However, the reduction of tracking errors by the MC-MS-VPLL also reduces the impact of the nonlinearity which is therefore neglected in the further analysis.

Figure 9 shows a functional diagram of MSC-SS-VPLL: It is initialized by independent PLLs to avoid the estimation of integer ambiguities and biases. Once all PLLs are in lock, the tracking errors are transformed into a range drift and an ionospheric drift. Both parameters are filtered by the filter 92 and transformed back to phase by the back transformation unit 93. The discriminator outputs are also used for RAIM to detect severe multipath and satellite anomalies.

The tracking errors are transformed by a least-square estimation into a range drift (including all non-dispersive errors) and the ionospheric delay drift on E1/ L1, i.e.

$$\begin{bmatrix} \Delta\hat{\tilde{r}}(t_i) \\ \Delta\hat{I}(t_i) \end{bmatrix} = \mathbf{S}_i \Delta\boldsymbol{\varphi}(t_i) = \left(\mathbf{X}^T\boldsymbol{\Sigma}_i^{-1}\mathbf{X}\right)^{-1}\mathbf{X}^T\boldsymbol{\Sigma}_i^{-1} \begin{bmatrix} \Delta\phi_1(t_i) \\ \vdots \\ \Delta\phi_M(t_i) \end{bmatrix}, \qquad (29)$$

with

$$\mathbf{X} = \begin{bmatrix} 1 & q_{11}^2 \\ \vdots & \vdots \\ 1 & q_{1M}^2 \end{bmatrix}, \qquad (30)$$

and the weighting matrix $\Sigma_i$ at instant $i$. The $(m,m)$-th element of the diagonal matrix $\Sigma_i$ is set to the variance of the Costa's discriminator output given by Kaplan and Hegarty in [15] as

$$\sigma^2(t_i) = \frac{1}{2C_m(t_i)/N_0 T} \cdot \left(1 + \frac{1}{2C_m(t_i)/N_0 T}\right). \qquad (31)$$

The estimated drifts in range and ionospheric delay are fed into a two-dimensional loop filter **F**. The choice of its filter order and bandwidth is a trade-off between low noise performance and capability of tracking high dynamics. Typical filter coefficients are described by Kaplan and Hegarty in [15]. The last integrator of the loop filter is shifted after the back-transformation **X**. It determines an estimate of the filtered tracking errors from the filtered drifts in range and ionosphere, i.e.

$$\Delta\hat{\boldsymbol{\varphi}}(t_i) = \begin{bmatrix} \Delta\hat{\phi}_1(t_i) \\ \vdots \\ \Delta\hat{\phi}_M(t_i) \end{bmatrix} = \mathbf{X}\mathbf{F}\begin{bmatrix} \Delta\hat{\tilde{r}}(t_i) \\ \Delta\hat{I}(t_i) \end{bmatrix} = \mathbf{X}\mathbf{F}\mathbf{S}_i\Delta\boldsymbol{\varphi}(t_i). \qquad (32)$$

The filtered tracking errors are then accumulated in the NCO. There exist a variety of digital integrators, e.g. the simple boxcar integrator of Figure 9 or the bilinear transform integrator given by Kaplan and Hegarty in [15]. The tracked phase of the MC-SS-VPLL is computed recursively and given by

$$\hat{\boldsymbol{\varphi}}(t_i) = \hat{\boldsymbol{\varphi}}(t_{i-1}) + \mathbf{X}\mathbf{F}\mathbf{S}_i\left(\boldsymbol{\varphi}(t_i) - \hat{\boldsymbol{\varphi}}(t_{i-1})\right) \qquad (33)$$

$$= \left(\mathbf{1} - \mathbf{X}\mathbf{F}\mathbf{S}_i\right)\hat{\boldsymbol{\varphi}}(t_{i-1}) + \mathbf{X}\mathbf{F}\mathbf{S}_i\boldsymbol{\varphi}(t_i), \qquad (34)$$

and its covariance matrix is obtained recursively as

$$\Sigma_{\hat{\phi}_i} = (1 - \mathbf{XFS}_i)\Sigma_{\hat{\phi}_{i-1}}(1 - \mathbf{XFS}_i)^T + \mathbf{XFS}_i\Sigma_i\mathbf{S}_i^T\mathbf{F}^T\mathbf{X}^T. \qquad (35)$$

Figure 9 shows that the MC-SS-VPLL is initialized by independent PLLs to avoid the estimation of integer ambiguities and biases for tracking. The transition from individual to joined tracking is realized by the switches 26 after the discriminators 25. Note that not all switches 26 have to be changed simultaneously as joint tracking is already possible with two carriers.

### 3.2 The Multi-Carrier Multi-Satellite Vector PLL

The MC-MS-VPLL is an extension of the MC-SS-VPLL to joint tracking of all satellites 2.

The phase change between two epochs is given from (1) as

$$\lambda_m \Delta\phi_{u,m}^k = \Delta r_u^k + c\Delta\delta\tau_u - q_{1m}^2\Delta I_u^k + \Delta T_u^k + \Delta\varepsilon_{u,m}^k, \qquad (36)$$

and tracked by the MC-MS-VPLL once it is locked. The drift of the orbital error $\Delta\dot{\delta r}_u^k$ and the drift of the satellite

clock $c\Delta\delta\tau^k$ are negligible for short time span. They determine the required rate of re-initialization of the MC-MS-VPLL.

The phase change of (5) between two epochs is rewritten as:

$$\lambda_m \Delta\phi_{u,m}^k = \Delta r_u^k + c\Delta\delta\tau_u - q_{1m}^2\Delta I_u^k + \Delta T_u^k + \Delta\varepsilon_{u,m}^k$$

$$= \mathbf{e}_u^{k,T}(t_i)\cdot\left(\mathbf{x}_u(t_i) - \mathbf{x}^k(t_i)\right) - \mathbf{e}_u^{k,T}(t_{i-1})\cdot\left(\mathbf{x}_u(t_{i-1}) - \mathbf{x}^k(t_{i-1})\right) + \qquad (37)$$

$$+ c\Delta\delta\tau_u - q_{1m}^2\Delta I_u^k + T_d(t_i)$$

$$+ m_w(\theta_u^k(t_i))\cdot T_{z,w}(t_i) - m_w(\theta_u^k(t_{i-1}))T_{z,w}(t_{i-1}) + \Delta\varepsilon_{u,m}^k \qquad (38)$$

$$= \mathbf{e}_u^{k,T}(t_i)\cdot\left(\mathbf{x}_u(t_i) - \mathbf{x}_u(t_{i-1})\right) - \mathbf{e}_u^{k,T}(t_i)\cdot\mathbf{x}^k(t_i) + \mathbf{e}_u^{k,T}(t_{i-1})\cdot\mathbf{x}^k(t_{i-1})$$

$$+ \left(\mathbf{e}_u^{k,T}(t_i) - \mathbf{e}_u^{k,T}(t_{i-1})\right)\cdot\mathbf{x}_u(t_{i-1}) + c\Delta\delta\tau_u - q_{1m}^2\Delta I_u^k + T_d(t_i)$$

$$+ m_w(\theta_u^k(t_i))\cdot(T_{z,w}(t_i) - T_{z,w}(t_{i-1})) + (m_w(\theta_u^k(t_i)) - m_w(\theta_u^k(t_{i-1})))T_{z,w}(t_{i-1})$$

$$+ \Delta\varepsilon_{u,m}^k, \qquad (39)$$

where $\mathbf{e}_u^k$ denotes the unit vector pointing from the k -th satellite 2 at position $x^k$ to the receiver at position $x_u$. The carrier phase is corrected by three parameters: the satellite position known from the ephemeris, the dry components of the tropospheric delay known from a model, and the tracked parameters of the previous epoch, i.e.

$$\lambda_m \Delta\phi_{c,u,m}^k = \lambda_m \Delta\phi_{u,m}^k + \mathbf{e}_u^{k,T}(t_i)\cdot\mathbf{x}^k(t_i) - \mathbf{e}_u^{k,T}(t_{i-1})\cdot\mathbf{x}^k(t_{i-1})$$

$$- \left(\mathbf{e}_u^{k,T}(t_i) - \mathbf{e}_u^{k,T}(t_{i-1})\right)\cdot\mathbf{x}_u(t_{i-1}) - T_{z,d}(t_i)$$

$$- (m_w(\theta_u^k(t_i)) - m_w(\theta_u^k(t_{i-1})))T_{z,w}(t_{i-1}) \qquad (40)$$

$$= \mathbf{e}_u^{k.T}(t_i)\Delta\mathbf{x}_u + c\Delta\delta\tau_u - q_{1m}^2\Delta I_u^k + m_w(\theta_u^k(t_i))\Delta T_{z.w} + \Delta\varepsilon_{u.m}^k. \qquad (41)$$

In the further analysis, the indices of receiver and time are omitted for simplicity. The corrected carrier tracking errors of all satellites are written in matrix-vector notation as

$$\Delta\boldsymbol{\varphi}_c = \begin{bmatrix} \lambda_1\Delta\phi_{c.1}^{(1)} \\ \vdots \\ \lambda_1\Delta\phi_{c.1}^{(K)} \\ \vdots \\ \lambda_M\Delta\phi_{c.M}^{(1)} \\ \vdots \\ \lambda_M\Delta\phi_{c.M}^{(K)} \end{bmatrix} = \underbrace{\begin{bmatrix} \mathbf{e}^{(1).T} & 1 & q_{11}^2 & & m_w^{(1)} \\ \vdots & & & \ddots & \vdots \\ \mathbf{e}^{(K).T} & 1 & & q_{11}^2 & m_w^{(K)} \\ \vdots & \vdots & & \vdots & \vdots \\ \mathbf{e}^{(1).T} & 1 & q_{1M}^2 & & m_w^{(1)} \\ \vdots & \vdots & & \ddots & \vdots \\ \mathbf{e}^{(K).T} & 1 & & q_{1M}^2 & m_w^{(K)} \end{bmatrix}}_{\mathbf{X}} \cdot \begin{bmatrix} \Delta\mathbf{x} \\ c\Delta\delta\tau \\ \Delta\mathbf{I} \\ \Delta T_{z.w} \end{bmatrix} + \Delta\boldsymbol{\varepsilon}, \qquad (42)$$

and the weighted least-square estimates of the drifts in position, clock offset, ionospheric delays and tropospheric zenith delay are given by

$$\begin{bmatrix} \Delta\hat{\mathbf{x}} \\ c\Delta\hat{\delta\tau} \\ \Delta\hat{\mathbf{I}} \\ \Delta\hat{T}_{z.w} \end{bmatrix} = \mathbf{S}\Delta\boldsymbol{\varphi}_c = \left(\mathbf{X}^T\boldsymbol{\Sigma}^{-1}\mathbf{X}\right)^{-1}\mathbf{X}^T\boldsymbol{\Sigma}^{-1}\Delta\boldsymbol{\varphi}_c, \qquad (43)$$

where the time-dependent weighting matrix E contains the (co-)variances of the discriminator outputs as given in (31).

This least-square estimation requires an a priori knowledge of the unit vectors $\mathbf{e}_u^k$ which are provided by a feed-back from position computation after tracking. The $\Delta\hat{\mathbf{x}}$, $c\Delta\hat{\delta\tau}$, $\Delta\hat{\mathbf{I}}$ and $\Delta\hat{T}_{z.w}$ are filtered, transformed back into phases and accumulated as shown in Fig. 2. The tracked phases are obtained recursively as in (34) for the MC-SS-VPLL but with an extended $\mathbf{X}$, $\Sigma$, $\mathbf{F}$ and $\varphi$.

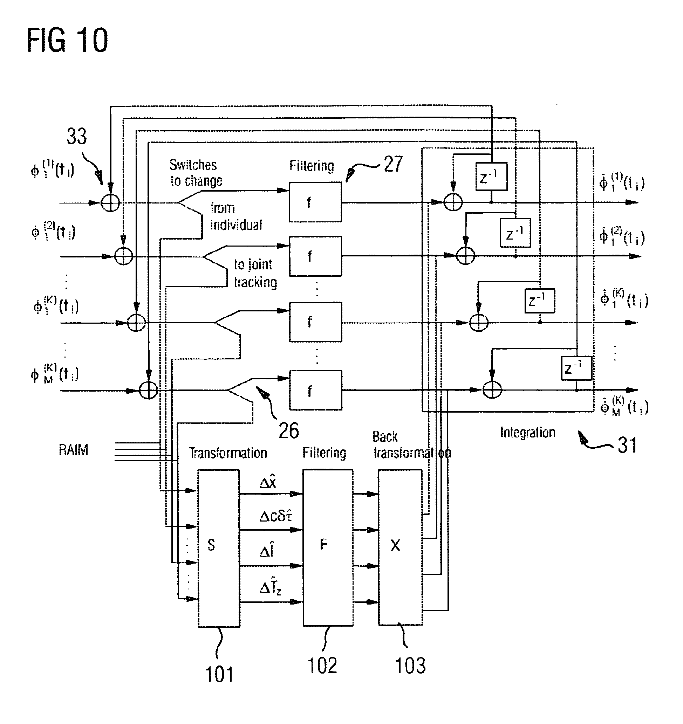

A functional diagram of a MC-MS-VPLL embodiment of the PLL 11 is shown in Figure 10. It is again initialized by independent PLLs to avoid the estimation of integer ambiguities and biases. Once all PLLs are in lock, the tracking errors are transformed into drifts of position, receiver clock offset, ionospheric delays and tropospheric zenith delay by a transformation unit 101. These parameters are then filtered by a filter 102, transformed back into the phase domain by a back transformation unit 103 and accumulated.

### 3.3 The Multi-Carrier Multi-Satellite Vector PLL with orthogonal projections

The previous MC-MS-VPLL from Figure 10 achieves its minimum error performance only if the filters for position, clock offset, ionospheric delays and tropospheric zenith delay are the same. The loop filters have to be adapted to the most dynamic parameter which is in general the position. The temporal variation in tropospheric wet zenith delay is several orders of magnitude lower than the velocity of an aircraft which motivates the introduction of orthogonal projections for separate tracking of $\Delta\mathbf{x}$, $c\Delta\delta\tau$, $\Delta\mathbf{I}$ and $\Delta T_{z.w}$.

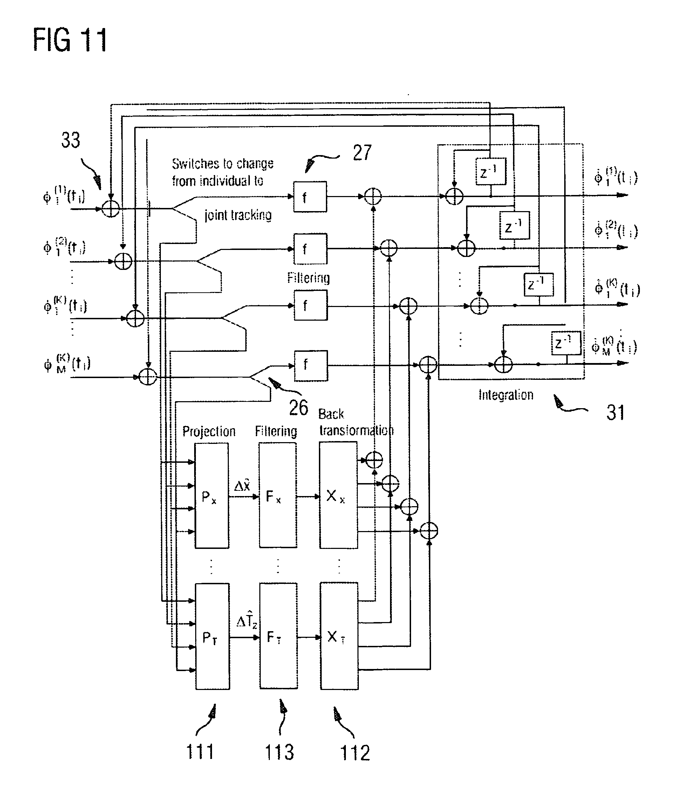

Figure 11 depicts a functional diagram of an extended Multi-Carrier, Multi-Satellite VPLL (extended MC-MS-VPLL) which couples the phases of all satellites and frequencies but separates the tracking of position, clock offset and atmospheric delays. This concept can also be applied to the MC-SS-VPLL of Figure 9

Orthogonal projections are applied to the discriminator outputs in tansformation units 111 to separate the drifts in position, receiver clock offset, ionospheric and tropospheric delays. The vector PLL furher comprises four loop filters 112 which are adapted to the dynamics of these parameters. The filtered parameters are back transformed by back transformation units 113 and the phases of all satellites / frequencies are recovered at the PLL output.

The tracking performance of the extended MC-MS-VPLL can be derived analytically: The transformation **X** of (42) is split into its components, i.e.

$$\mathbf{X}_x = \mathbf{1}^{M \times 1} \otimes \begin{bmatrix} \mathbf{e}^{(1),T} \\ \vdots \\ \mathbf{e}^{(K),T} \end{bmatrix}, \quad \mathbf{X}_{\delta\tau} = \mathbf{1}^{KM \times 1},$$

$$\mathbf{X}_I = \begin{bmatrix} q_{11}^2 \\ \vdots \\ q_{1M}^2 \end{bmatrix} \otimes \mathbf{1}^{K \times K}, \quad \mathbf{X}_T = \mathbf{1}^{M \times 1} \otimes \begin{bmatrix} m_w^{(1)} \\ \vdots \\ m_w^{(K)} \end{bmatrix}, \tag{44}$$

with the Kronecker product $\otimes$. The matrices are combined to the blocks

$$\mathbf{X}_{\overline{x}} = [\mathbf{X}_{\delta\tau}, \mathbf{X}_I, \mathbf{X}_T] \qquad \mathbf{X}_{\overline{\delta\tau}} = [\mathbf{X}_x, \mathbf{X}_I, \mathbf{X}_T]$$

$$\mathbf{X}_{\overline{I}} = [\mathbf{X}_x, \mathbf{X}_{\delta\tau}, \mathbf{X}_I] \qquad \mathbf{X}_{\overline{T}} = [\mathbf{X}_x, \mathbf{X}_{\delta\tau}, \mathbf{X}_I], \tag{45}$$

and an orthogonal projector is computed for each tracked parameter, e.g. x :

$$P_{\mathbf{X}_{\overline{x}}}^{\perp} = \mathbf{1}^{KM \times KM} - \mathbf{X}_{\overline{x}} \left( \mathbf{X}_{\overline{x}}^T \Sigma^{-1} \mathbf{X}_{\overline{x}} \right)^{-1} \mathbf{X}_{\overline{x}}^T \Sigma^{-1}, \tag{46}$$

which eliminates the drifts of the clock offset and atmospheric delays. The least-square estimate of position drift has been determined by Teunissen in [16] as

$$\Delta\hat{\mathbf{x}} = \mathbf{P}_x \Delta\boldsymbol{\varphi}_c = \left( \overline{\mathbf{X}}_x^T \Sigma^{-1} \overline{\mathbf{X}}_x \right)^{-1} \overline{\mathbf{X}}_x^T \Sigma^{-1} \Delta\boldsymbol{\varphi}_c, \tag{47}$$

with $\overline{\mathbf{X}}_x = P_{\mathbf{X}_{\overline{x}}}^{\perp} \mathbf{X}_x$. Replacing $\mathrm{X}_{\overline{x}}$ by $\mathrm{X}_{\overline{\delta\tau}}$, $\mathrm{X}_{\overline{I}}$ or $\mathrm{X}_{\overline{T}}$ in (45) and (46) yields the estimated drifts $c\Delta\hat{\delta\tau}$, $\Delta\hat{I}$ and $\Delta\hat{T}_z$ which are individually filtered and accumulated over time. The tracked phase of the MC-MS-VPLL is obtained from Figure 11 as

$$\hat{\varphi}(t_i) = \left( 1 - \mathbf{X}_x \mathbf{F}_x \mathbf{P}_x^i - \mathbf{X}_{\delta\tau} \mathbf{F}_{\delta\tau} \mathbf{P}_{\delta\tau}^i - \mathbf{X}_I \mathbf{F}_I \mathbf{P}_I^i - \mathbf{X}_T \mathbf{F}_T \mathbf{P}_T^i \right) \hat{\varphi}(t_{i-1})$$

$$+ \left( \mathbf{X}_x \mathbf{F}_x \mathbf{P}_x^i + \mathbf{X}_{\delta\tau} \mathbf{F}_{\delta\tau} \mathbf{P}_{\delta\tau}^i + \mathbf{X}_I \mathbf{F}_I \mathbf{P}_I^i + \mathbf{X}_T \mathbf{F}_T \mathbf{P}_T^i \right) \varphi(t_i). \tag{48}$$

Its covariance is also computed recursively and given by

$$\Sigma_{\hat{\phi}_i} = \left(1 - \mathbf{X}_x \mathbf{F}_x \mathbf{P}_x^i - \mathbf{X}_{\delta\tau} \mathbf{F}_{\delta\tau} \mathbf{P}_{\delta\tau}^i - \mathbf{X}_I \mathbf{F}_I \mathbf{P}_I^i - \mathbf{X}_T \mathbf{F}_T \mathbf{P}_T^i \right) \Sigma_{\hat{\phi}_{i-1}}$$

$$\cdot \left(1 - \mathbf{X}_x \mathbf{F}_x \mathbf{P}_x^i - \mathbf{X}_{\delta\tau} \mathbf{F}_{\delta\tau} \mathbf{P}_{\delta\tau}^i - \mathbf{X}_I \mathbf{F}_I \mathbf{P}_I^i - \mathbf{X}_T \mathbf{F}_T \mathbf{P}_T^i \right)^T$$

$$+ \left(\mathbf{X}_x \mathbf{F}_x \mathbf{P}_x^i + \mathbf{X}_{\delta\tau} \mathbf{F}_{\delta\tau} \mathbf{P}_{\delta\tau}^i + \mathbf{X}_I \mathbf{F}_I \mathbf{P}_I^i + \mathbf{X}_T \mathbf{F}_T \mathbf{P}_T^i \right) \Sigma_{\hat{\phi}_i}$$

$$\cdot \left(\mathbf{X}_x \mathbf{F}_x \mathbf{P}_x^i + \mathbf{X}_{\delta\tau} \mathbf{F}_{\delta\tau} \mathbf{P}_{\delta\tau}^i + \mathbf{X}_I \mathbf{F}_I \mathbf{P}_I^i + \mathbf{X}_T \mathbf{F}_T \mathbf{P}_T^i \right)^T , \qquad\qquad (49)$$

and allows the choice of different filter bandwidths for the drifts in position, receiver clock offset, ionospheric delays and tropospheric zenith delay.

### 4. Benefit of Vector PLL over independent PLLs

This section demonstrates the benefit of the Vector PLL over independent tracking loops for the two most important threats of carrier tracking. The first one is jamming by an erroneous signal from a pseudolite. The MC-SS-VPLL from Figure 9 recovers the phases on the distorted frequencies with the help of other frequencies and enables reliable carrier tracking even if the received signals are affected by a frequency hopping jammer. The second threat is ionospheric scintillation that arises from random fluctuations of electron density in the E and F regions of the ionosphere. It causes frequent deep fades in amplitude and substantial increase in phase noise. The MC-MS-VPLLs from Figure 10 and 11 suppresses the peaks in tracking errors as deep fades in amplitude do not occur at all satellites simultaneously.

### 4.1 Performance of Multi-Carrier Vector PLL during jamming

The MC-SS-VPLL from Figure 9 can estimate the carrier phase on all GPS (L1,L2;L5) or Galileo (E1, E6, E5b, E5a) frequencies even if measurements on one GPS or two Galileo frequencies are not available due to jamming, i.e.

$$\widetilde{\boldsymbol{\varphi}}_i = \mathbf{T}_i \boldsymbol{\varphi}_i \qquad\qquad (50)$$

with the selection matrix $\mathbf{T}_i$ that is obtained from a 4x4 unit matrix by deleting the rows corresponding to the jammed frequencies. If only the $m$-th frequency is jammed at epoch $i$, $\mathbf{T}_i$ is written as

$$\mathbf{T}_i = \begin{bmatrix} \mathbf{1}^{(m-1)\times(m-1)} & \mathbf{0}^{(m-1)\times 1} & \mathbf{0}^{(m-1)\times(4-m)} \\ \mathbf{0}^{(4-m)\times(m-1)} & \mathbf{0}^{(4-m)\times 1} & \mathbf{1}^{(4-m)\times(4-m)} \end{bmatrix}. \qquad\qquad (51)$$

The carrier phases on all frequencies are recovered recursively by

$$\hat{\boldsymbol{\varphi}}_i = \left(\mathbf{1}^{4\times 4} - \mathbf{XF}\left(\widetilde{\mathbf{X}}_i^T \widetilde{\boldsymbol{\Sigma}}_i^{-1} \widetilde{\mathbf{X}}_i\right)^{-1} \widetilde{\mathbf{X}}_i^T \widetilde{\boldsymbol{\Sigma}}_i^{-1} \mathbf{T}_i\right) \hat{\boldsymbol{\varphi}}_{i-1}$$

$$+ \mathbf{XF}\left(\widetilde{\mathbf{X}}_i^T \widetilde{\boldsymbol{\Sigma}}_i^{-1} \widetilde{\mathbf{X}}_i\right)^{-1} \widetilde{\mathbf{X}}_i^T \widetilde{\boldsymbol{\Sigma}}_i^{-1} \widetilde{\boldsymbol{\varphi}}_i, \qquad\qquad (52)$$

with

$$\widetilde{\mathbf{X}}_i = \mathbf{T}_i \mathbf{X} \quad \text{and} \quad \widetilde{\boldsymbol{\Sigma}}_i = \mathbf{T}_i \boldsymbol{\Sigma}_i \mathbf{T}_i^T. \qquad\qquad (53)$$

The covariance matrix of $\hat{\boldsymbol{\varphi}}_i$ is derived from (52) as

$$\Sigma_{\hat{\phi}_i} = \left(1 - \mathbf{XF}\left(\widetilde{\mathbf{X}}_i^T \widetilde{\boldsymbol{\Sigma}}_i^{-1} \widetilde{\mathbf{X}}_i\right)^{-1} \widetilde{\mathbf{X}}_i^T \widetilde{\boldsymbol{\Sigma}}_i^{-1} \mathbf{T}_i\right) \Sigma_{\hat{\phi}_{i-1}}$$

$$\left(1 - \mathbf{XF}\left(\widetilde{\mathbf{X}}_i^T \widetilde{\boldsymbol{\Sigma}}_i^{-1} \widetilde{\mathbf{X}}_i\right)^{-1} \widetilde{\mathbf{X}}_i^T \widetilde{\boldsymbol{\Sigma}}_i^{-1} \mathbf{T}_i\right)^T + \mathbf{XF}\left(\widetilde{\mathbf{X}}_i^T \widetilde{\boldsymbol{\Sigma}}_i^{-1} \widetilde{\mathbf{X}}_i\right)^{-1} \mathbf{F}^T \mathbf{X}^T. \tag{54}$$

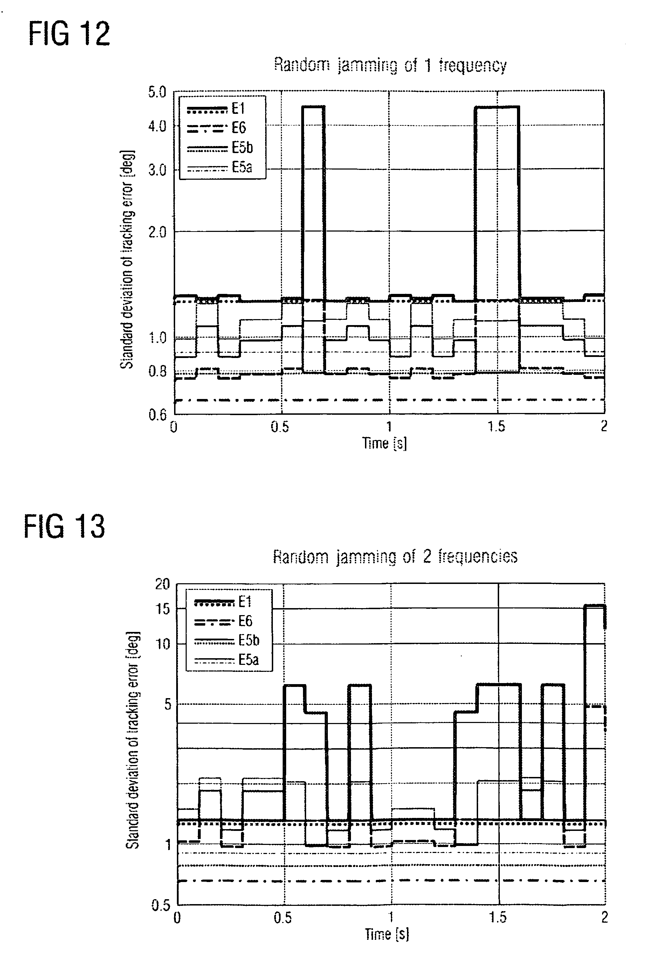

Figure 12 and 13 show the tracking performance of the MC-SS-VPLL for Galileo, a predetection integration time of 20 ms, a filter bandwidth of 10 Hz and the jamming patterns of Table 2 and 3. In Figure 12 and 13, the lower line associated with a particular frequency illustrates the tracking error in the case that no jamming occurs.

$\Sigma_{\hat{\phi}_i}^{\Lambda}$ is dominated by the second term in (54) which is proportional to

$$\frac{1}{\det\left(\widetilde{\mathbf{X}}^T \widetilde{\mathbf{X}}\right)} = (M - J) \cdot \left(\sum_{\substack{m=1 \\ m \neq j}}^{M} q_{1m}^4\right) - \left(\sum_{\substack{m=1 \\ m \neq j}}^{M} q_{1m}^2\right)^2, \tag{55}$$

where $J$ denotes the number of jammed frequencies $j$.

For single frequency jamming, $j = 1$ (E1) maximizes (54). If two frequencies are jammed, the lack of E1 and E6 carrier phases achieves the largest degradation among all combinations of two frequencies. Figure 12 shows that an outage of one carrier signal is easily compensated by the MC-SS-VPLL. The simultaneous jamming of two random frequencies results in a maximum tracking error of 15° for E1, 10° for E6 and of only 2° for both E5a and E5b carrier phases as can be recognized from Figure 13.

## 4.2 Performance of Multi-Carrier, Multi-Satellite Vector PLL during ionospheric scintillations

The received signal is written as

$$s(t) = A(t)e^{j\phi(t)} = A_0(t)\delta A(t)e^{j(\phi_0(t)+\delta\phi(t))}, \tag{56}$$

with the nominal amplitude $A_0(t)$ and phase $\phi(t)$ (without scintillation) and its variations $\delta A(t)$, $\delta\phi(t)$ due to scintillations. Pullen et al. modeled the intensity variations $\delta I(t) = \delta A(t)^2$ by a Nakagami distribution in [4], i.e.

$$p(\delta I) = \frac{m(m\delta I)^{m-1}}{(m-1)!} e^{-m\delta I}, \tag{57}$$

with $m = 1/S_4^2$ and the scintillation intensity index $S_4 = \sigma(\delta I)/E\{\delta I\}$. Scintillation samples $\delta A[i]$ and $\delta\phi[i]$ are generated according to the wideband model described by Pullen et al. in [4] and by Hegarty et al. in [3]. First, two statistically independent sequences $\widetilde{\delta I}$: N(0, $\sigma_I^2$) and $\widetilde{\delta\phi}$: N(0,1) of white Gaussian noise are computed. Then, a linear transformation is performed to introduce correlation between amplitude and phase scintillations, i.e.

$$\begin{bmatrix} \delta I \\ \delta\phi \end{bmatrix} = \begin{bmatrix} 1 & 0 \\ \rho_{\delta I\delta\phi}\sigma_{\delta\phi}/\sigma_{\delta I} & \sigma_{\delta\phi}\sqrt{1-\sigma_{\delta I\delta\phi}^2} \end{bmatrix} \begin{bmatrix} \widetilde{\delta I} \\ \widetilde{\delta\phi} \end{bmatrix}, \tag{58}$$

where $\sigma_{\delta I\delta\phi}$ denotes the correlation coefficient between intensity and phase scintillations. A set of cascaded band-pass, low-pass and high-pass Butterworth filters is then applied to introduce time correlation and the desired power spectral density of the form $P_\phi(f) = K \cdot f^P$ with a unitless slope of $p = \{2,...,5.5\}$. The transfer function of the cascaded filters is given by Pullen et al. in [4] as

$$|H(f)|^2 = K \cdot \frac{f^{2m_h}}{f^{2m_h} + c^{2m_h}} \cdot \frac{d^{2m_l}}{f^{2m_l} + d^{2m_l}} \cdot \frac{f^2 + a_0^2}{f^2 + b_0^2} \cdot \frac{f^2 + a_1^2}{f^2 + b_1^2} \cdots \frac{f^2 + a_n^2}{f^2 + b_n^2}, \qquad (59)$$

where the filter orders $m_h$, $m_l$ and the corner frequencies c , $d$ , $a_0$, .... $a_n$ and $b_0$, ... , $b_n$ are chosen to best fit the strong scintillation data of Basu [10]. Note that the integral $\int_0^\infty |H(f)|^2\, df = 1$ is normalized by the gain $K$ and that different filters are used for intensity and phase scintillations. After spectral shaping, the scintillation samples are transformed from a Gaussian to the Gamma/Nakagami distribution of (57). The carrier to noise power ratio $C_m/N_0(t_i)$ is linear proportional to the scintillation intensity $\delta I$ which is generated for each satellite independently.

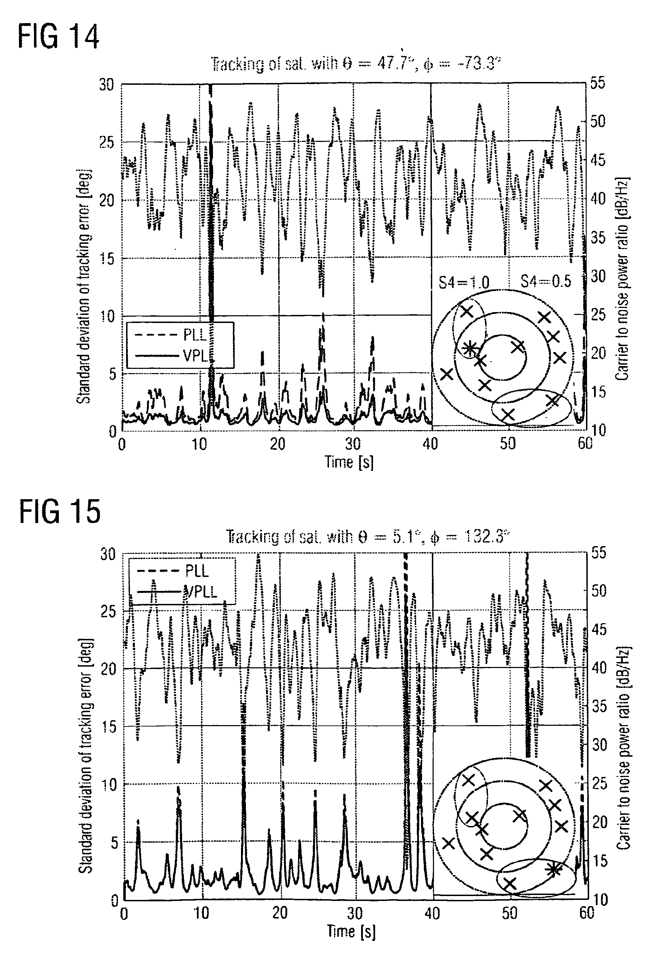

Figures 14 to 19 show the tracking performance of the MC-MS-VPLL from Figure 10 in comparison to independent PLLs. The left ordinate represents the standard deviation of the tracking error that it depicted in the diagram by a solid line, whereas the right ordinate refers to the carrier to noise power ratio that vary substantially due to scintillations and that is depicted in the diagrams by the dotted line.

The skyplots contained in the diagrams indicate the Galileo geometry (as seen from TUM) and the scintillation intensity, i.e. signals from five satellites are affected by moderate scintillations ($S_4$ = 0.5) and four satellites suffer from strong scintillations ($S_4$ = 1.0) with deep fades up to 30 dB. The positions of these four satellites 2 are encircled.

Figure 14 shows the tracking of the satellite 2 at the position $\theta$ = 47.7˚, $\phi$ = -73.3˚ ,
Figure 15 shows the tracking of the satellite 2 at the position $\theta$ = 5.1˚, $\phi$ =132.3˚ ,

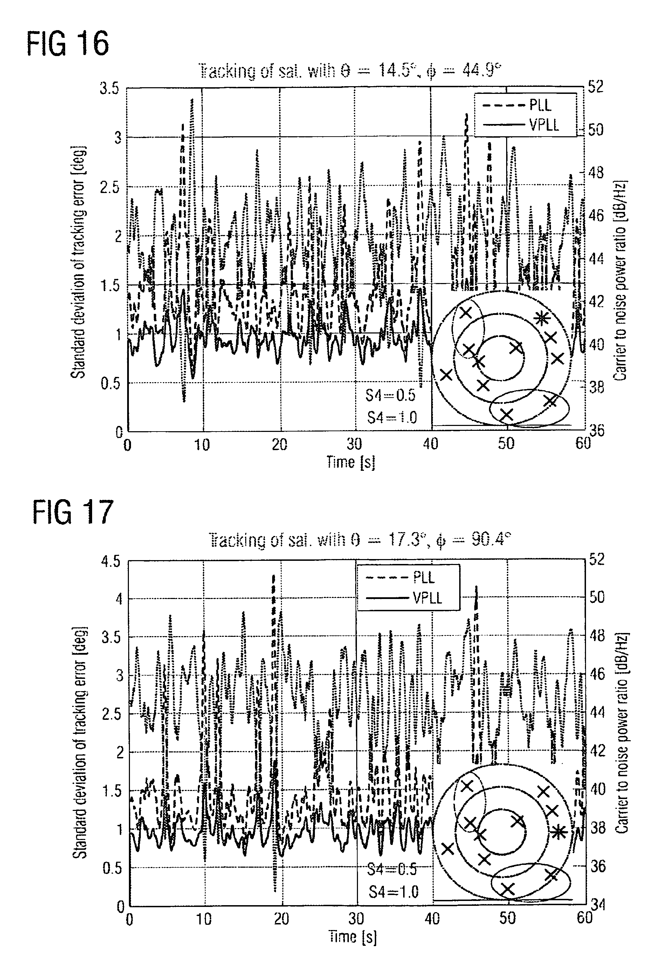

Figure 16 shows the tracking of the satellite 2 at the position $\theta$ =14.5˚, $\phi$ = 44.9˚ ,
Figure 17 shows the tracking of the satellite 2 at the position $\theta$ = 17.3˚, $\theta$ = 90.4˚ ,

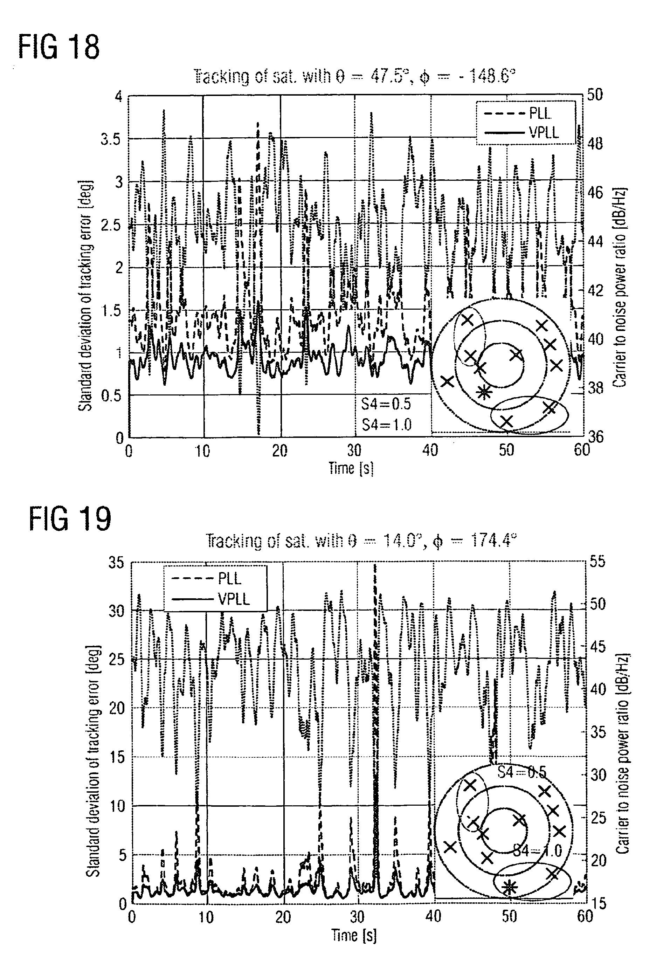

Figure 18 shows the tracking of the satellite 2 at the position $\theta$ = 47.5˚, $\phi$= -148.6˚ and
Figure 19 shows the tracking of the satellite 2 at the position $\theta$ =14.0˚ , $\phi$ =174.4˚ .

The same scintillation intensity has been assumed for all frequencies (E1, E5a, E5b) which corresponds to a worst-case assumption. A filter bandwidth of $B_L$ =10 Hz, a predetection integration time of $T_{im}$ = 20 ms and an average carrier to noise power ratio of $C/N_o$ = 45 dB/Hz has been chosen. The joint tracking of all satellites reduces the peaks in tracking errors by up to 4 dB. The largest tracking errors have been observed in Figure 14 for the satellite at 5˚ elevation during the deep fades of more than 30 dB.

The tracking performance of the MC-MS-VPLL significantly improves when the loop filters are adapted to the dynamics in position, receiver clock offset, ionospheric delays and tropospheric zenith delay.

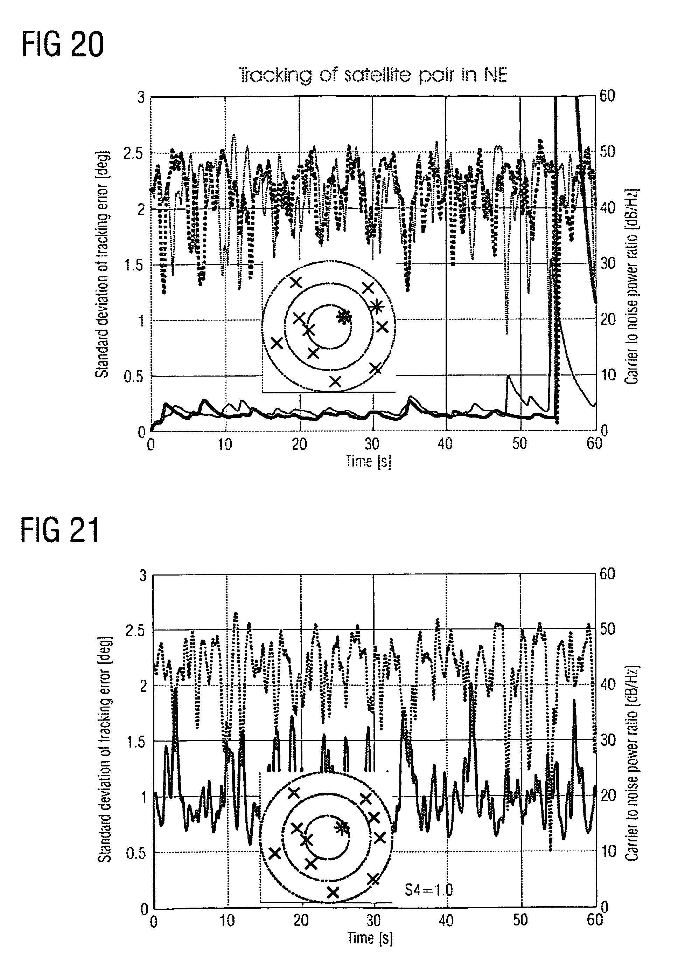

Figure 20 shows the accuracy of ionospheric delay tracking with an orthogonal projection of the tracking errors to eliminate the drifts in position, receiver clock offset and tropospheric zenith delay. A scintillation intensity of $S_4$ = 1.0 has been assumed for all satellites. The filter bandwidth is set to 0.1 Hz which is sufficient to follow the dynamics of the ionospheric delay and enables a tracking error of less than 0.5˚ for intensity fades up to 30 dB. The small filter bandwidth is reflected in the slow decline of the tracking error after the deep fade at 55 s.

The accuracy of carrier tracking can be further improved by performing the tracking in two stages: In the first step, the extended MC-MS-VPLL is used to track the ionospheric delays and tropospheric wet zenith delay with optimized loop filters. In a second step, the joint tracking is repeated with these atmospheric delays as a priori information. The fixing of ionospheric delays reduces the number of tracked parameters by $K$ which allows a dramatic improvement in

$\sigma_{\dot\phi}$ at the price of a small bias. This approach requires a storage of the I and Q samples during the inherent delay between both stages of the MC-MS-VPLL. Figure 21 shows a tracking error of less than 2˚ even during deep fades of 35 dB/Hz in accordance with [13]. The filter bandwidths for position and clock drifts has been set to 20 Hz and a scintillation index of $S4$ = 1.0 has been assumed for all satellites.

## 5 Compensation of ionospheric wideband effects

The Galileo E5 signal has a bandwidth of 51 MHz which is more than 25 times the bandwidth of the GPS C/A code and results in a substantial reduction of the noise level. Gao et al. have shown in [17] that the ionospheric dispersion within wideband Galileo signals is not negligible. It causes ripples in the code signal that result in a power shift in correlation result from the real part to the imaginary part. If no wideband correction is applied, the phase tracked by an independent PLL is biased by 14˚ /100 *TECU,* and this bias can not be mapped to the ionospheric delay tracked by a MC-MS-VPLL. Therefore, an efficient method for the suppression of wideband ionospheric effects is suggested in this section.

**5.1 Introduction to ionospheric wideband effects**

The dispersive ionosphere delays the signal $s(t)$ which results in a phase shift in frequency domain. The distorted signal is obtained using the Fourier transform and its inverse, i.e.

$$\tilde{s}(t) = \int_{-\infty}^{+\infty}\int_{-\infty}^{+\infty} s(t)e^{-j2\pi ft}dt \cdot e^{-j2\pi f \cdot \tau(f)} \cdot e^{j2\pi ft}df, \qquad (60)$$

with

$$\tau(f) = \frac{40.3 \cdot \text{TEC}}{f^2 \cdot c}, \qquad (61)$$

where TEC represents the total electron content.

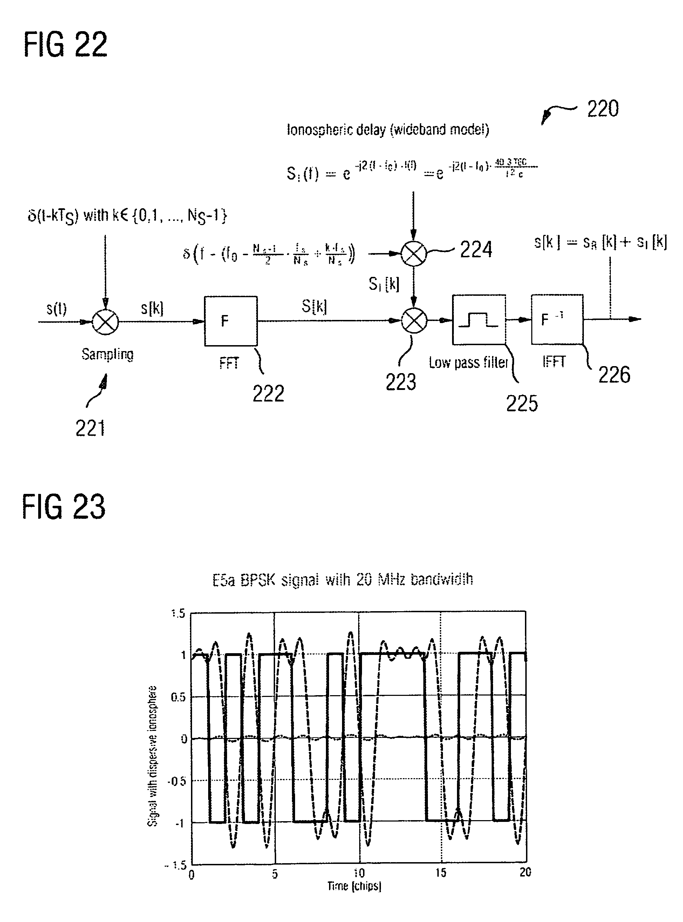

Figure 22 shows a functional diagram of a compensation ciruit 220 for compensating dispersive ionospheric effects. In practice, measurements are sampled at $t = kT$ and the frequency is discretized to $f = f_0 + \dfrac{n}{NT}$ with the carrier frequency $f_0$, the number of samples $N$, the sampling interval $T$ and $n = \left[ -\dfrac{N-1}{2}, \dfrac{N-1}{2} \right]$. Therefore, the time-continuous signal is replaced by a time-discrete signal and the DFT/ IDFT are considered instead of the Fourier transform for continuous signals, i.e.

$$\tilde{s}[k] = \frac{1}{N}\sum_{n=-\frac{N-1}{2}}^{\frac{N-1}{2}} \tilde{S}[n] \cdot e^{j2\pi\frac{kn}{N}} = \frac{1}{N}\sum_{n=-\frac{N-1}{2}}^{\frac{N-1}{2}} S[n] \cdot S_I[n] \cdot S_F[n] \cdot e^{j2\pi\frac{kn}{N}}, \qquad (62)$$

where $S[n]$ is the Fourier transform of the transmitted signal, i.e.

$$S[n] = \sum_{k=0}^{N-1} s[k] \cdot e^{-j2\pi\frac{kn}{N}} = \sum_{k=-\frac{N-1}{2}}^{\frac{N-1}{2}} s[k] \cdot e^{-j2\pi\frac{kn}{N}}, \qquad (63)$$

and $S_I[n]$ is the Fourier transform of the ionospheric delay, i.e.

$$S_I[n] = \exp\left( -j2\pi\frac{n}{NT} \cdot \frac{40.3 \cdot TEC}{\left(f_0 + \dfrac{n}{NT}\right)^2 \cdot c} \right), \qquad (64)$$

and $S_F[n]$ is the Fourier transform of the low pass filter in the receiver, i.e.

$$S_F[n] = \begin{cases} 1 & if \quad |\dfrac{n}{NT}| \leq BW, \\ 0 & else \end{cases} \qquad (65)$$

with receiver bandwidth $BW$.

Correspondingly, the the compensation circuit 220 comprises a sampling unit 221 that is sampling $s(t)$ at $t = kT$ and a Fast Fourier Transformation (= FFT) unit 222 is converting the sampled signal $s(t)$ into the frequency domain where the frequency components $S[k]$ are multiplied by the conjugate of $S_I[k]$ in a multiplyer unit 223 that receives the conjugate of the frequency components $S_I[k]$ from a modelling unit 224 that might be a sampling unit for sampling the wideband model of the ionospheric delay. The output of the multiplier 223 is passed to a low pass filter 225 and back transformed in an Inverse Fast Fourier Transformation (= IFFT) unit 226.

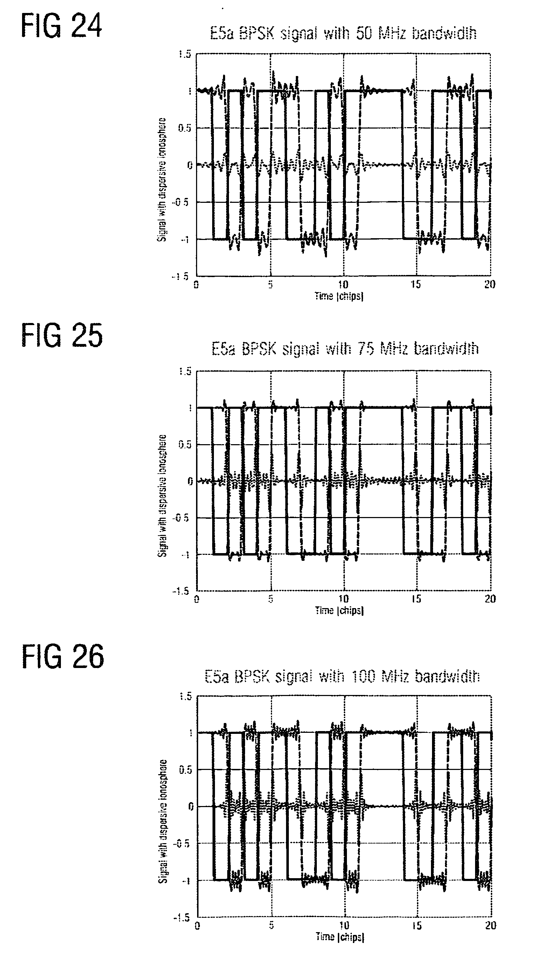

Figure 23 to 26 demonstrate the impact of the receiver bandwidth on the signal deformation of the BPSK modulated E5a signal. The signal that is not affected by the ionosphere is depicted as a reference with a solid line. The dispersive ionosphere delays the signal (100 TECU) and shifts some power from the real part (dashed line) to the imaginary part (dotted line). For $BW = 20$ MHz, the ripples due to the Gibb's phenomenon are dominating over the ripples due the ionospheric dispersion within the E5a band. The degradation of correlation and tracking results remains negligible for this modulation and bandwidth. Increasing the bandwidth reduces the Gibb's phenomenon but increases the ionospheric dispersion. For the real part of the signal, the smallest ripples can be observed for a bandwidth of 75 MHz. For the imaginary part of the signal, the amplitude of the ripples increases monotonously with the bandwidth.

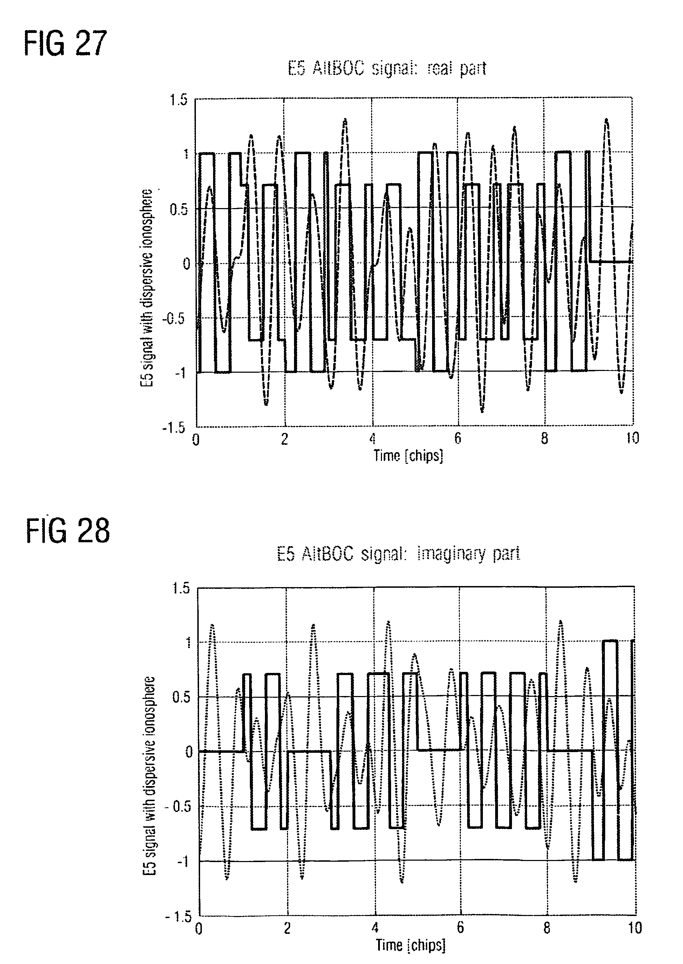

Figures 27 and 28 demonstrate that the ionospheric dispersion is much more critical for the AltBOC E5 signal as a significant part of the power is allocated at the edges of the E5 band which has a bandwidth of 50 MHz.

The Gibb's phenomenon is also more pronounced due to the use of a subcarrier which increases the number of chip transitions. Thus, the chips can no longer be recognized from the degraded signal shape.

The wideband ionosphere also degrades the correlation results and tracking performance. Our derivation of the correlation result follows the approach of Misra and Enge in [18] but additionally takes wideband ionospheric effects into account. It starts with the received signal

$$\widetilde{r}(t) = \sqrt{P_c} \cdot \widetilde{s}(t - \tau) \cdot D(t - \tau) \cdot \cos(2\pi(f_c + f_D)t + \theta) + n(t), \qquad (66)$$

with the received power $P_c$, the baseband signal $\widetilde{s}(t)$ including wideband ionospheric effects, the data bit $D(t)$, the propagation time $\tau$, the carrier frequency $f_c$, the Doppler shift $f_D$, the received carrier phase $\theta$ and the noise term $n(t)$. After multiplication with $cos(2\pi(f_c - f_{IF})t + \theta_{IF})$ and bandpass filtering, the signal at intermediate frequency $f_{IF}$ becomes

$$\widetilde{r}_{IF}(t) = \sqrt{P_c} \cdot \widetilde{s}(t - \tau) \cdot D(t - \tau) \cdot \cos(2\pi(f_{IF} + f_D)t + \delta\theta) + n(t) \qquad (67)$$

with $\delta\theta = \theta - \theta_{IF}$. The PLL and FLL provide estimates of the phase offset $\hat{\delta\theta}$ and Doppler frequency $\hat{f}_D$ that are used for downconversion into the baseband signal given by

$$\widetilde{r}_B(t) = \sqrt{P_c} \cdot \widetilde{s}(t - \tau) \cdot D(t - \tau) \cdot e^{-j\left(2\pi(f_D - \hat{f}_D)t + \delta\theta - \hat{\delta\theta}\right)}. \qquad (68)$$

This baseband signal is multiplied by the prompt code $s(t - \hat{\tau})$ and integrated over $T_i = N \cdot T_c$, i.e.

$$Z_p = \frac{1}{T_i} \int_0^{T_i} \widetilde{r}_B(t) \cdot s(t - \hat{\tau}) dt$$

$$= \frac{1}{T_i} \int_0^{T_i} \sqrt{P_c} \cdot D(t - \tau) \widetilde{s}(t - \tau) s(t - \hat{\tau}) e^{-j\left(2\pi(f_D - \hat{f}_D)t + \delta\theta - \hat{\delta\theta}\right)} dt. \qquad (69)$$

This correlation result can be further simplified if the data bit $D(t)$ is known and the frequency is perfectly synchronized, i.e.

$$Z_p' = \sqrt{P_c} \cdot e^{-j(\delta\theta - \delta\hat{\theta})} \cdot \frac{1}{T_i} \int_0^{T_i} \widetilde{s}(t-\tau) s(t-\hat{\tau}) dt$$

$$= \sqrt{P_c} \cdot e^{-j(\delta\theta - \delta\hat{\theta})} \cdot R(\Delta\tau), \qquad (70)$$

with

$$R(\Delta\tau) = \frac{1}{T_i} \int_0^{T_i} \widetilde{s}(t-\tau) s(t-\hat{\tau}) dt, \qquad (71)$$

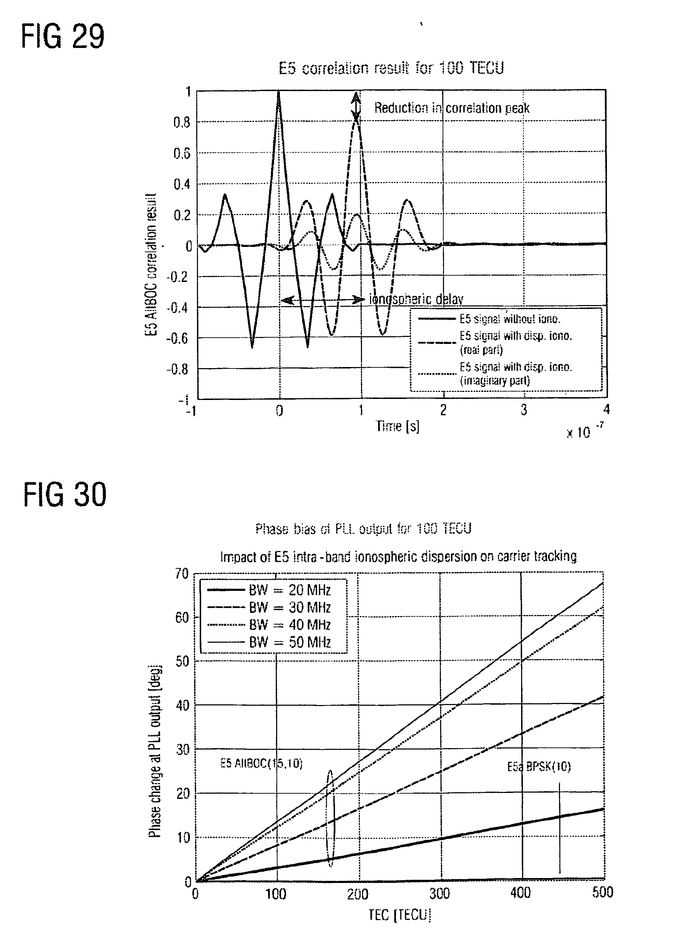

nd $\Delta\tau = \tau - \hat{\tau}$. The correlation function $R(\Delta\tau)$ is often assumed to be real-valued which is only valid if the ionospheric dispersion within the band is negligible. Clearly, this is not the case for the Galileo E5 band. Figure 29 shows a reduced real-valued correlation peak for the AltBOC E5 signal as some part of the power is shifted from the real part to the imaginary part. Moreover, the correlation function is smoother compared to a non-dispersive ionospheric delay. The temporal shift of the correlation function corresponds to the ionospheric delay on the carrier frequency, i.e. the dispersion within the E5 band does not cause any additional delay for the code measurements.

The complex correlation function $R(\Delta\tau) = R_0 \cdot e^{j\Delta\phi(\Delta\tau)}$ results in a PLL tracking error that is given by

$$\Delta\varphi(\Delta\tau_{max}) = atan\left(\frac{\Im\left(R(\Delta\tau_{max})\right)}{\Re\left(R(\Delta\tau_{max})\right)}\right) \quad \text{with} \quad \Delta\tau_{max} = arg\max_{\Delta\tau}\Re\left(R(\Delta\tau)\right), \qquad (72)$$

and shown for different *TEC* values and filter bandwidths in Figure 30. The PLL tracking error $\Delta\phi$ increases linear with *TEC* but remains less than 0.5° for the E5a/E5b signals even during an active ionosphere. However, a phase offset of 15° can be observed for AltBOC(15,10) tracking during normal ionospheric conditions and of up to 70° during ionospheric storms.

**5.2 Ionospheric wideband correction for carrier tracking**

The correction of wideband ionospheric effects requires an estimate $\hat{I}$ of the ionospheric delay that is not biased by wideband effects. As the intra-band ionospheric dispersion does not change the code delay, $\hat{I}$ can be obtained by combining the E1 and E5 code measurements in a geometry-free, ionosphere-preserving linear combination that is described in the next. The accuracy of $\hat{I}$ is further improved by the ionosphere-free carrier smoothing of Hwang et al. [19]. The received signal $\widetilde{s}[k]$ of (62) is corrected in frequency domain, i.e.

$$\hat{s}[k] = \mathsf{F}^{-1}\left(S_i^* \cdot \mathsf{F}(\widetilde{s}[k])\right), \qquad (73)$$

where F denotes the discrete Fourier transformation given by (63) and $S_i^*$ is the conjugate complex of (64). An accuracy of 2 m for $\hat{I}$ is sufficient to suppress the phase bias due to wideband ionospheric effects to less than 1°.

This method requires an FFT of the downconverted signal and an IFFT after the application of the wideband correction. Alternatively, a phase correction can be determined from a look-up table whose values are depicted in Figure 30 and applied before tracking. The equalization in frequency domain is omitted, which improves the efficiency of this method as it does not require the FFT and IFFT.

**6 Integration of weighted RAIM into VPLL**

In the previous sections, it has been shown that the MC-MS-VPLL improves the tracking performance of independent tracking loops as the stronger signals help to track the weaker signals. However, the joint tracking of all satellites 2 and frequencies also means that a failure on one satellite 2 or frequency affects the tracking of all other satellites 2 and frequencies. Therefore, the Weighted Receiver Autonomous Integrity Monitoring (RAIM) of Walter and Enge [20] shall be integrated into the VPLL for the detection and exclusion of measurements that are affected by satellite anomalies (e.g. phase jumps on satellite clocks) or severe multipath.

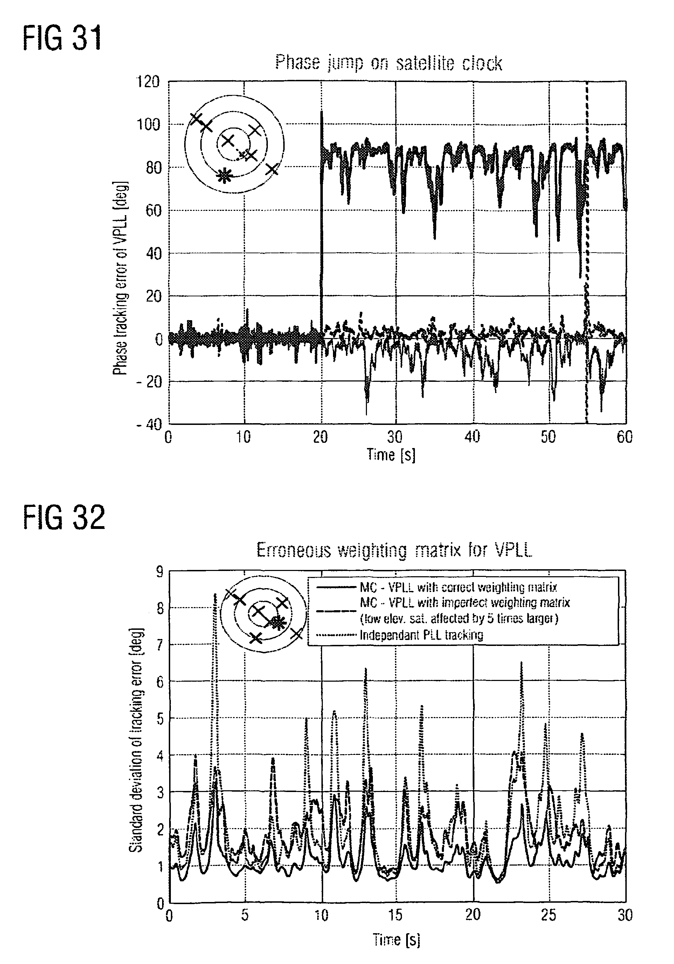

Figure 31 shows the temporal evolution of the tracking error before and after a 90° phase jump at t = 20 see on one satellite. This phase jump can not be mapped to the tracked position, clock offset or atmospheric delays. Therefore, an instability can be observed on all satellites 2 after the phase jump. The assumed satellite geometry and the selected satellites are depicted in the skyplot.

Another threat of the MC-MS-VPLL are errors in the weighting matrix E. Figure 32 shows a slight increase in the tracking error if the low elevation satellites are affected by a five time larger noise level than considered in $\Sigma$. However, the joint tracking still provides significantly lower tracking errors than independent PLLs during deep amplitude fades.

## 6.1 Weighted test statistics based on discriminator outputs

In the VPLLs of Figures 9 and 10, the discriminator outputs provide the tracking errors $\Delta\varphi$ that are used for RAIM. Weighted range residuals are evaluated to analyse the modelling accuracy of $\Delta\varphi$ and to detect failures, i.e.

$$\mathbf{r} = (\mathbf{1} - \mathbf{X}(\mathbf{X}^T\mathbf{\Sigma}^{-1}\mathbf{X})^{-1}\mathbf{X}^T\mathbf{\Sigma}^{-1})\Delta\varphi, \qquad (74)$$

with **X** given by (30) for the MC-SS-VPLL of Figure 9 and by (42) for the MC-MS-VPLL of Figure 10. The range residuals are combined in a weighted sum of squared errors (SSE) test statistic that is defined as

$$WSSE = \mathbf{r}^T\mathbf{\Sigma}^{-1}\mathbf{r}, \qquad (75)$$

which can be rewritten as

$$
\begin{aligned}
WSSE &= trace\left(\mathbf{r}^T\mathbf{\Sigma}^{-1}\mathbf{r}\right) \\
&= trace\left(\mathbf{r}\mathbf{r}^T\mathbf{\Sigma}^{-1}\right) \\
&= trace\big((\mathbf{1} - \mathbf{X}(\mathbf{X}^T\mathbf{\Sigma}^{-1}\mathbf{X})^{-1}\mathbf{X}^T\mathbf{\Sigma}^{-1})\Delta\varphi\Delta\varphi^T \\
&\qquad (\mathbf{1} - \mathbf{X}(\mathbf{X}^T\mathbf{\Sigma}^{-1}\mathbf{X})^{-1}\mathbf{X}^T\mathbf{\Sigma}^{-1})^T\mathbf{\Sigma}^{-1}\big)
\end{aligned} \qquad (76)
$$

If $\Delta\varphi$ can be modeled as in (42) and $\Delta\varepsilon \sim N(\mathbf{0}, \Sigma)$, the *WSSE* is $\chi^2$ distributed with $MK$ - 3 -1- $K$ - 1 = $(M$ -1$)K$ - 5 degrees of freedom. The number of degrees of freedom is also the mean of the *WSSE* distribution.

## 6.2 Detection of various faults: phase jumps, errors in weighting matrix, multipath

An erroneous weighting matrix, phase jumps and severe multipath amplify the *WSSE* which motivates the introduction of the *WSSE* amplification factor, i.e.

$$A_{WSSE} = \frac{1}{(M-1)\cdot K - 5} \cdot WSSE. \qquad (77)$$

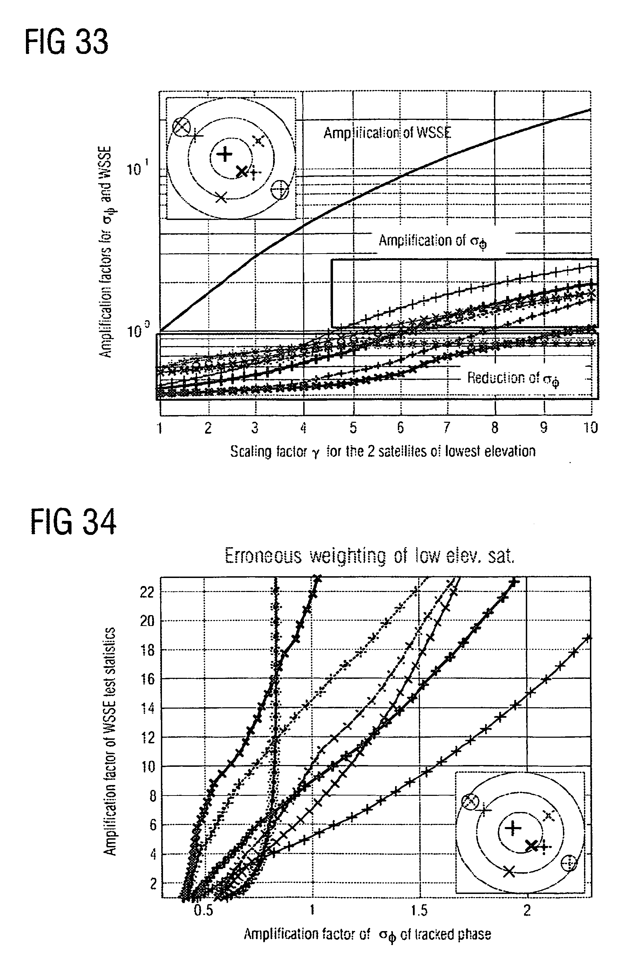

Figure 33 demonstrates how much $\sigma_{\phi}^k$ is scaled for a VPLL w.r.t. an independent PLL. The two satellites of lowest elevation are characterized by a standard deviation or, that is $\gamma$ times larger than considered in the weighting matrix. For $\gamma \le 4.5$, the benefit of joint tracking is larger than the degradation due to a biased covariance matrix. If $\gamma$ is

increased beyond this threshold, more and more satellites are tracked with an error that is larger than in the case of independent PLLs.

Figure 33 also includes the *WSSE* amplification that increases faster with $\gamma$ than $\dot{\sigma}\phi$. The fault detection is based on a comparison between the *WSSE* and the threshold $WSSE_{th}$ that is implicitly given by $P(WSSE(\gamma=1) > WSSE_{th})$ < $10^{-7}$. For a MC-MS-VPLL with $M = 3$ and $K = 8$, there exist 11 degrees of freedom which results in the threshold $WSSE_{th} = 54.4$. The *WSSE* exceeds this threshold with a probability of 45.5% for $\gamma = 5$, of 77.9% for $\gamma = 7.5$, and of 90.9% for $\gamma = 10$.

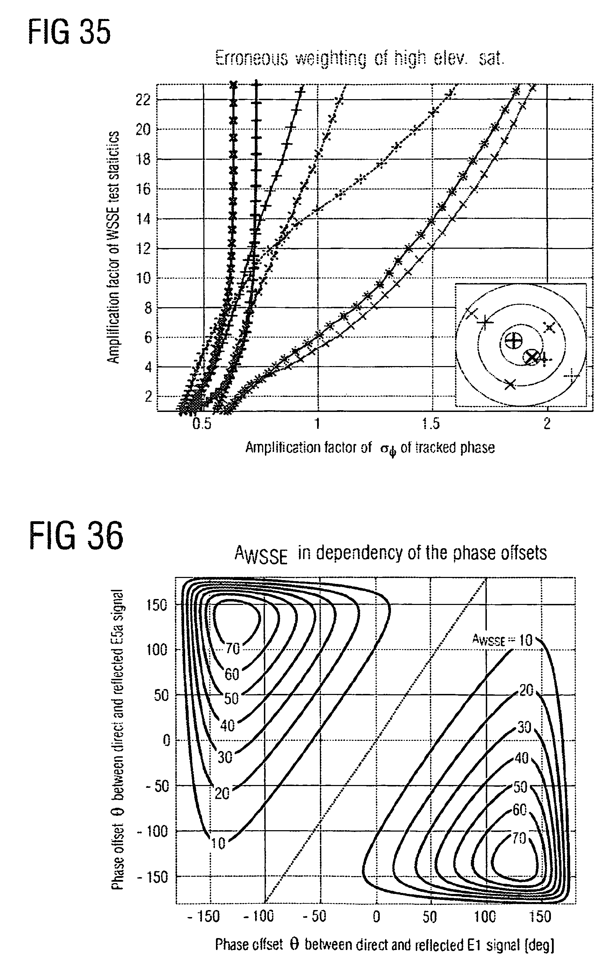

Figures 34 and 35 show the *WSSE* amplification as a function of the scaling of $\dot{\sigma}\phi$. In Figure 34, the two satellites of lowest elevation are affected by $\gamma \in [1,10]$ and, in Figure 35, the two satellites of highest elevation suffer from an enhanced noise level. In both cases, the *WSSE* amplification exceeds the $\dot{\sigma}\phi$ amplification and tends to be larger for high elevation satellites than for low elevation satellites. Note that the $\dot{\sigma}\phi$ amplification of the critical satellites converges to a certain value as the scaling of $\gamma$ affects both the MC-MS-VPLL and the independent PLL.

The *WSSE* test statistic is also used to detect carrier phase multipath. In [21], Georgiadou and Kleusberg have determined the phase bias due to multipath from multiple reflections for a baseline of 24 m: They computed the geometry-free $\lambda_1\phi_1 - \lambda_2\phi_2$ linear combination and subtracted the mean of this linear combination to eliminate the integer ambiguities. They repeated this experiment on the next day at the same time and observed an impressive correlation between both geometry-free combinations.

Their model for multipath with multiple reflections is briefly introduced here and then used for the MC-MS-VPLL of Figure 16. The sum of the direct and all reflected signals is described by

$$s = A\cos(\phi) + A\sum_{i=1}^{n_r}\alpha_i\cos(\phi+\theta_i), \qquad (78)$$

with the amplitude $A$ and phase $\phi$ of the direct signal, the fading coefficient $\alpha_i$ and the phase offset $\theta_i$ of the $i$-th reflected path. Equation (78) can also be written as

$$s = A\beta\cos(\phi+\psi), \qquad (79)$$

with

$$\beta = \sqrt{\left(1+\sum_{i=1}^{n_r}\alpha_i\cos(\theta_i)\right)^2 + \left(\sum_{i=1}^{n_r}\alpha_i\sin(\theta_i)\right)^2}$$

$$\psi = arctan\left(\frac{\sum_{i=1}^{n_r}\alpha_i\sin(\theta_i)}{1+\sum_{i=1}^{n_r}\alpha_i\cos(\theta_i)}\right). \qquad (80)$$

Figure 36 shows the *WSSE* amplification for a dual frequency (E1-E5a) MC-MS-VPLL according to Figure 10 during strong multipath from a single reflector. It is assumed that only the two satellites of lowest elevation are affected by multipath ($\alpha_i = 0.9$) on both frequencies but all satellites are affected by severe ionospheric scintillations ($S_4 = 1.0$).

The *WSSE* amplification is negligible for the phase offsets $\theta = \pm\pi$ which result in a power loss but no phase bias. A low power turns into a low weight in the MC-MS-VPLL which compensates these power fades with the help of other satellites and frequencies. No WSSE amplification is also observed if $\theta_{E5} = f_{E1}^2/f_{E5}^2 \cdot \theta_{E1}$. In this case, the multipath is mapped to the ionospheric delay which is a tracked parameter and does not cause a *WSSE* amplification. The largest *WSSE* occurs for $\theta_{E5} = \pm 130°$ and $\theta_{E5} = -\theta_{E1}$, which corresponds to a phase offset of 90° between both reflections. However, such a multipath is also not critical as it can be easily detected from the large *WSSE* amplification. The reliability of multipath detection becomes critical only for $A_{WSSE} < 10$. The fault detection capability improves for less intense ionospheric scintillations due to the reduced number of deep amplitude fades.

The *WSSE* amplification is compared to a threshold to verify the joint tracking. If it is below the threshold, then the joint tracking results are accepted. Otherwise, the *WSSE* amplification is computed for the joint tracking of all possible subsets that are obtained by disregarding the measurements from a single satellite on a single frequency. The subset with the lowest *WSSE* amplification is selected and compared with the threshold of the *WSSE* amplification. This removal of measurements associated with one frequency of one satellite is continued until the *WSSE* amplification is below the predefined threshold. The threshold is determined from the probability of false alarm requirement and the $\chi^2$ distribution of the *WSSE* amplification. In avionics, a typical value for the probability of false alarm requirement is $10^{-6}$.

**7 Conclusion**

A multi-carrier vector phase locked loop has been proposed for robust carrier tracking during ionospheric scintillations, carrier phase multipath or interference from jammer. It includes a weighted least-square phase estimator and filtering of position drift, clock drift and tropospheric delay drift. The ionospheric drift is estimated with a geometry-free linear combination and a linear polynomial to fit the time series.

It should be noted that the functional units of the functional diagrams may be implemented by software or hardware in a single phyical unit or be distributed over various functional units.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

Table 1: Weighting coefficients (L1, E5a, E5b) of geometry-free, ionosphere-preserving linear combinations

| $r_1$ | $r_2$ | $r_3$ | $\alpha_1$ | $\alpha_2$ | $\alpha_3$ | $\sigma_{\phi LC}/\sigma_{\Phi 0}$ |
|---|---|---|---|---|---|---|
| 1 | 1 | 1 | -1.3221 | 0.5417 | 0.7803 | 1.6280 |
| 1 | 100 | 1 | -1.2606 | 0.0001 | 1.2605 | 1.7827 |
| 1 | 1 | 100 | -1.4220 | 1.4218 | 0.0002 | 2.0109 |
| 1 | 100 | 100 | -1.3316 | 0.6257 | 0.7059 | 94.3392 |
| 100 | 1 | 1 | -0.0182 | -10.9476 | 10.9659 | 15.6019 |

Table 2: Jamming of one out of four Galileo frequencies (1:E1, 2:E6, 3:E5b, 4:E5a). The first row contains the number of time steps. The second row contains the number of the carrier signal.

| 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|
| 2 | 4 | 2 | 3 | 3 | 4 | 1 | 3 | 4 | 3 | 2 | 4 | 2 | 3 | 1 | 1 | 4 | 4 | 3 | 2 |

Table 3: Jamming of two out of four Galileo frequencies (1:E1, 2:E6, 3:E5b, 4:E5a). The first row contains the number of time steps. The second and third row contain the number of the carrier signal.

| 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|
| 2 | 3 | 2 | 3 | 3 | 1 | 1 | 2 | 1 | 2 | 2 | 2 | 2 | 1 | 1 | 1 | 3 | 1 | 2 | 1 |
| 4 | 4 | 3 | 4 | 4 | 4 | 3 | 3 | 4 | 3 | 4 | 4 | 3 | 3 | 4 | 4 | 4 | 4 | 3 | 2 |

**References**

[1] P. Henkel and C. Günther, Three frequency linear-combinations for Galileo, 4-th IEEE Workshop on Positioning, Proc. of 4-th IEEE Workshop on Positioning, Communication and Navigation (WPNC '07), pages 239-245, Hannover, Germany, March 2007.

[2] P. Henkel and C. Günther, Joint L/C Band Code-Carrier Linear Combinations for Galileo, International Journal of Navigation and Observation, Special Issue on Future GNSS Signals, Hindawi Publ., Jan. 2008.

[3] C. Hegarty, M. El-Arini, T. Kim and S. Ericson, Scintillation modeling for GPS-Wide Area Augmentation System receivers, Radio Science, Vol. 36, No. 5, pp. 1221-1231, Sep. 2001.

[4] S. Pullen, G. Opshaug, A. Hansen, T. Walter, P. Enge and B. Parkinson, A Preliminary Study of the Effect of Ionospheric Scintillation on WAAS User Availability in Equatorial Regions, Proc. of ION-GPS '98, pp. 687-699, Nashville, TN, Sep. 1998.

[5] T. Olsen and B. Forssell, Jamming GPS - Susceptibility of some Civil GPS Receivers, GPS World, Jan. 2003.

[6] J. Spilker, Fundamentals of Signal Tracking Theory, Global Positioning System: Theory and Application Volume I, Edited by B. Parkinson and J. Spilker, Progress in Aeronautics and Astronautics, Volume 163, 1996.

[7] A. Dierendonck, GPS Receivers, Global Positioning System: Theory and Application Volume I, Edited by B. Parkinson and J. Spilker, Progress in Aeronautics and Astronautics, Volume 163, 1996.

[8] J. Seo, T. Walter, E. Marks, T. Chiou and P. Enge, Ionospheric Scintillation Effects on GPS Receivers during Solar Minimum and Maximum, Proc. of Intern. Beacon Satellite Symposium, Boston, MA, Jun. 2007.

[9] A. Niell, Global Mapping Functions for the Atmosphere Delay at Radio Wavelengths, Journal of Geophysical Research, Vol. 101, pp. 3227-3246, 1996.

[10] S. Basu, 250 MHz/GHz Scintillation parameters in the Equatorial, Polar, and Auroral Envrionments, IEEE Journal of Selected Areas in Communications, Vol. SAC-5, No. 2, pp. 102-115, Feb. 1987.

[11] M. Zhodzishsky and J. Ashjaee, *Joint tracking of carrier phases of the signals received from different satellites,* U.S. patent (6.313.789 B1), June 1998.

[12] M. Zhodzishsky, S. Yudanov, V. Veitsel and J. Ashjaee, Co-Op Tracking for carrier phase, Proc. of ION-GPS '98, pp. 653-664, Nashville, TN, Sep. 1998.

[13] P. Henkel, K. Giger and C. Günther, Multi-Carrier Vector Phase Locked Loop for Robust Carrier Tracking, Proc. of European Navigation Conference (ENC), Toulouse, France, April 2008.

[14] S. Pullen, Y.-S. Park and P. Enge, The Impact and Mitigation of Ionosphere Anomalies on Ground Based Augmentation of GNSS, Proc. of 12-th International Ionospheric Effects Symposium, May 2008.

[15] E. Kaplan and C. Hegarty, Understanding GPS - Principles and applications, 2nd edition, Artech House, 2006.

[16] P. Teunissen, Adjustment theory - an introduction, Series on Mathematical Geodesy and Positioning, TU Delft, 2003.

[17] G. Gao, S. Datta-Barua, T. Walter and P. Enge, Ionospheric Effects for Wideband GNSS Signals, ION Annual Meeting, Cambridge (MA), USA, Apr. 2007.

[18] P. Misra and P. Enge, Global Positioning System - Signals, Measurements, and Performance, Ganga-Jamuna Press, Lincoln (MA), USA, 2nd edition, 2006.

[19] P. Hwang, G. Graw and J. Bader, Enhanced Differential GPS Carrier-Smoothed Code Processing Using Dual-Frequency Measurements, J. of Navigation, vol. 46, No. 2, pp. 127-137, Summer 1999.

[20] T. Walter and P. Enge, Weighted RAIM for Precision Approach, Proc. of ION-GPS, pp. 1995-2004, Palm.

Springs (CA), USA, Sep. 1995.

[21] Y. Georgiadou and A. Kleusberg, On carrier signal multipath effects in relative GPS positioning, Manuscripta geoclaetica, Springer Verlag, Vol. 13, pp. 172-179, 1988.

**Claims**

1. A method for vector phase tracking a plurality of global positioning satellite carrier signals (4) comprising the steps of:

   - determining the input phase tracking error signals by a phase extraction unit (33) depending on trackable carrier signals (4) and oscillator signals associated with the trackable carrier signals (4);
   - transforming the input phase tracking error signals in a spatial domain by a transformation unit (28, 41, 91, 101, 111) for generating spatial difference signals;
   - filtering the spatial difference signals by a filter (27, 42, 92, 102, 112);
   - performing a back transformation of the spatial difference signals into output phase tracking error signals by a back transformation unit (30, 43, 93, 103, 113) for generating control signals for the oscillators (32) that are generating the oscillator signals;
   - generating output phase signals depending on the output phase tracking error signals by an output phase signal accumulator (31),

   **characterized in that**

   - for a tracked satellite (2), the phase extraction unit (33) is generating input phase tracking error signals at different frequencies associated with the various carrier signals (4) of the tracked satellite (2),
   - a multi-frequency estimation of the ionospheric error is performed and that
   - the output phase tracking error signals at the output of the back transformation unit (30, 43, 93, 103, 113) are determined depending on the estimated ionospheric error.

2. The method according to Claim 1,
   wherein:

   - a trackable signal of a single satellite (2) is tracked,
   - the spatial difference signal is a range difference signal including clock offset error and tropospheric delay error,
   - for the tracked satellite (2), the input phase tracking error signals supplied by the phase extraction unit (33) at different frequencies are linearly combined by a ionospheric error estimator (34) for determining the ionospheric error, and wherein
   - for determining a output phase tracking error signals at different frequencies associated with the various carrier signals (4) of the satellite (2), a multi-frequency phase estimation is performed by the transformation unit (28) depending on the input phase tracking error signals at different frequencies, after the ionospheric error has been estimated in the ionospheric error estimator (34) and after the ionospheric error has been suppressed in the input phase tracking error signals at different frequencies.

3. The method according to Claim 1,
   wherein:

   - for each tracked satellite (2), the phase extraction unit (33) is generating input phase tracking error signals at different frequencies associated with the various carrier signals (4) of each tracked satellite (2);
   - for each tracked satellite (2), the input phase tracking error signals supplied by the phase extraction unit (33) at different frequencies are linearly combined by an ionospheric error estimator (34) for determining the ionospheric error, and wherein
   - for determining output phase tracking error signals associated with each tracked satellite (2), a multi-frequency phase estimation is performed by the transformation unit (41) depending on the input phase tracking error signals at different frequencies after the ionospheric error has been estimated in the ionospheric error estimator (34) and after the ionospheric error has been suppressed in the input phase tracking error signals at different frequencies.

4. The method according to Claim 2 or 3,

wherein the input phase tracking error signals at different frequencies are linearly combined by the ionospheric error estimator (34) at the condition that the combination is geometry-free and preserving the ionospheric term.

5. The method according to Claim 4,
   wherein the ionospheric error is adjusted by the ionospheric error estimator (34) based on measurements of the phase tracking error signals at subsequent periods.

6. The method according to Claim 5,
   wherein the adjustment of the ionospheric error is performed by the ionospheric error estimator (34) using a polynom of first order as a regression curve.

7. The method according to Claim 1,
   wherein:

   - the spatial difference signal is a range difference signal including clock offset error and tropospheric delay error,
   - for a tracked satellite (2), the phase extraction unit (33) is generating input phase tracking error signals at different frequencies associated with the various carrier signals (4) of the tracked satellite (2),
   - a multi-frequency estimation of the ionospheric error is performed by the transformation unit (91) depending on the input phase tracking error signals supplied by the phase extraction unit (33),
   - the ionospheric error is filtered by the filter (92) and wherein
   - the filtered ionospheric error is transformed back into output phase tracking error signals by the back transformation unit (93) for generating control signals for the oscillators that are generating the oscillator signals.

8. The method according to Claim 1,
   wherein:

   - for each tracked satellite (2), the phase extraction unit (33) is generating input phase tracking error signals at different frequencies associated with the various carrier signals of each tracked satellite (2);
   - a multi-frequency estimation of the position error of the actual position of a receiving device (5, 14), the receiver clock offset error, the tropospheric error and the ionospheric error is performed by the transformation unit (101, 111) depending on the input phase tracking error signals supplied by the phase extraction unit (33);
   - the position error, the receiver clock offset error, the tropospheric error and the ionospheric error are filtered by the filter (102, 112);
   - the position error, the receiver clock offset error, the tropospheric error and the ionospheric error are transformed back into output phase tracking error signals by the back transformation unit (103, 113) for generating control signals for the oscillators (32) that are generating the oscillator signals.

9. The method according to Claim 7 or 8,
   wherein the multi-frequency phase estimation is performed by the transformation unit (91, 101) with a weighted least-square estimation process that minimizes the quadratic norm of the differences of the measured phase tracking errors and the mapped unknown parameters wherein the unknown parameters are mapped into the space of the measured tracking errors by a mapping matrix.

10. The method according to Claim 7 or 8,
    wherein at least one projection unit (111) determines at least one of the unknown parameters including the position error, the receiver clock offset error, the tropospheric error and the ionospheric error by:

    - performing a projection operation that projects the measured phase tracking errors and a mapping matrix, which maps the unknown parameters into the measured phase tracking errors, on the subspace of the at least one unknown parameter chosen from the list comprising the position error, the receiver clock offset error, the tropospheric error and the ionospheric error; and by
    - performing the multi-frequency phase estimation with a weighted least-square estimation process that minimizes the quadratic norm of the differences of the projected phase tracking errors and the at least one mapped unknown parameter.

11. The method according to Claim 9 or 10,
    wherein the mapping matrix contains the unit vectors pointing from the tracked satellites to the receiver, the ratio between the frequencies of the carrier and a reference frequency and mapping coefficients for the tropospheric errors.

**12.** The method according to any one of Claims 1 to 11,
wherein the ionospheric error is determined for each satellite individually and the tropospheric error is estimated in the direction of the zenith and projected into the actual slant direction of the tracked satellite.

**13.** The method according to any one of Claims 1 to 12,
wherein the phase tracking errors supplied by the phase extractors are verified by a weighted sum of squared error test statistics that is computed from the range residuals and the inverse weighting matrix and wherein a subset of all measurements is selected whose associated weighted sum of squared error test statistics is below a predefined threshold value.

**14.** The method according to any one of Claims 1 to 13,
wherein upon initialization the phases of the carrier signals (4) are tracked individually and wherein the operation is switched into vector phase tracking once the number of locked phases is sufficient for vector phase tracking.

**15.** The method according to any one of Claims 1 to 14,
wherein the ionospheric dispersion within the frequency band of a particular carrier signal (4) is corrected before the vector phase tracking is performed.

**16.** The method according to Claim 15,
wherein the ionospheric dispersion within the frequency band of a particular carrier signal is corrected using a compensation unit (220) by:

- estimating the total electron content by combining code measurement from at least two frequencies,
- determining the ionospheric delays for a number of frequencies within the frequency band,
- transforming the ionospheric delay into phase shifts in the frequency domain,
- applying the conjugate of the phase shifts to associated frequency components of the received signal.

**17.** The method according to Claim 15,
wherein the ionospheric dispersion within the frequency band of a particular carrier signal is corrected by:

- estimating the total electron content by combining code measurement from at least two frequencies,
- retrieving the phase shift from a look-up table containing the phase shift dependent on the total electron content.

**18.** The method according any one of the Claims 1 to 17,
wherein:

- the clock difference signal is filtered with filter parameters optimized to the oscillator characteristics and/or wherein
- the tropospheric error signal is filtered with filter parameters optimized to atmospheric conditions and/or wherein
- the ionospheric error signal is filtered with filter parameters optimized to ionospheric activity, and/or wherein
- the position difference or range difference signal is filtered with filter parameters optimized to receiver dynamics.

**19.** A device for global satellite navigation adapted for tracking a plurality of global positioning satellite signals **characterized in that**
the device (5, 14) is arranged for executing a method according to any one of the Claims 1 to 18.

**Patentansprüche**

**1.** Verfahren für die Vektor-Phasenverfolgung einer Vielzahl von globalen Navigationssatelliten-Trägersignals (4) mit den Verfahrensschritten:

- Bestimmen der Eingang-Phasenverfolgung-Fehlersignale durch eine Phasen-Extraktionseinheit (33) in Abhängigkeit von verfolgbaren Trägersignalen (4) und Oszillatorsignalen, die den verfolgbaren Trägersignalen (4) zugeordnet sind;
- Umwandeln der Eingang-Phasenverfolgung-Fehlersignale in eine Raumdomäne durch eine Transformationseinheit (28, 41, 91, 101, 111) zum Erzeugen von räumlichen Differenzsignalen;
- Filtern der räumlichen Differenzsignale durch einen Filter (27, 42, 92, 102, 112);

- Ausführen einer Rücktransformation der räumlichen Differenzsignale in Ausgang-Phasenverfolgung-Fehlersignale durch eine Rücktransformationseinheit (30, 43, 93, 103, 113) zum Erzeugen von Steuersignalen für die Oszillatoren (32), die die Oszillatorensignale erzeugen;

- Erzeugen von Ausgang-Phasensignale in Abhängigkeit von den Ausgang-Phasenverfolgung-Fehlersignalen durch einen Ausgang-Phasensignal-Akkumulator (31),

**dadurch gekennzeichnet, dass**

- die Phasen-Extraktionseinheit (33) für einen verfolgten Satelliten (2) Eingang-Phasenverfolgung-Fehlersignale bei verschiedenen Frequenzen erzeugt, die den verschiedenen Trägersignalen (4) des verfolgten Satelliten (2) zugeordnet sind,
- eine Mehrfrequenzschätzung des Ionosphärenfehlers ausgeführt wird und dass
- die Ausgang-Phasenverfolgung-Fehlersignale am Ausgang der Rücktransformationseinheit (30, 43, 93, 103, 113) in Abhängigkeit von den geschätzten Ionosphärenfehler bestimmt werden.

2. Verfahren nach Anspruch 1,
bei dem:

- ein verfolgbares Signal eines einzelnen Satelliten (2) verfolgt wird,
- das räumliche Differenzsignal ein Bereich-Differenzsignal einschließlich Uhrenversatzfehler und troposphärischen Verzögerungsfehler ist,
- für den verfolgten Satelliten (2) die Eingang-Phasenverfolgung-Fehlersignale, die von der Phasen-Extraktionseinheit (33) bei verschiedenen Frequenzen zu Verfügung gestellt werden, durch einen Ionosphärenfehler-Schätzer (34) linear kombiniert werden, um den Ionosphärenfehler zu bestimmen, und bei dem
- zum Bestimmen eines Ausgang-Phasenverfolgung-Fehlersignals bei verschiedenen Frequenzen, die den verschiedenen Trägersignalen (4) des Satelliten (2) zugeordnet sind, eine Mehrfrequenzphasenschätzung durch die Transformationseinheit (28) ausgeführt wird, in Abhängigkeit von den Eingang-Phasenverfolgung-Fehlersignalen bei verschiedenen Frequenzen, nachdem der Ionosphärenfehler im Ionosphärenfehler-Schätzer (34) geschätzt wurde und nachdem der Ionosphärenfehler in den Eingang-Phasenverfolgung-Fehlersignalen bei den verschiedenen Frequenzen unterdrückt worden ist.

3. Verfahren nach Anspruch 1,
bei dem:

- die Extraktionseinheit (33) für jeden verfolgten Satelliten Eingang-Phasenverfolgung-Fehlersignale bei verschiedenen Frequenzen erzeugt, die den verschiedenen Trägersignalen (4) jedes verfolgten Satelliten (2) zugeordnet sind;
- für jeden verfolgten Satelliten (2) die Eingang-Phasenverfolgung-Fehlersignale, die von der Phasen-Extraktionseinheit (33) bei verschiedenen Frequenzen zur Verfügung gestellt werden, durch einen Ionosphärenfehler-Schätzer (34) linear kombiniert werden, um den Ionosphärenfehler zu bestimmen, und bei dem
- zum Bestimmen von Ausgang-Phasenverfolgung-Fehlersignalen, die jedem verfolgten Satelliten (2) zugeordnet sind, von der Transformationseinheit (41) eine Mehrfrequenz-Phasenschätzung in Abhängigkeit von den Eingang-Phasenverfolgung-Fehlersignalen bei verschiedenen Frequenzen durchgeführt wird, nachdem der Ionosphärenfehler im Ionosphärenfehler-Schätzer (34) geschätzt wurde und nachdem der Ionosphärenfehler in den Eingang-Phasenverfolgung-Fehlersignalen bei den verschiedenen Frequenzen unterdrückt worden ist.

4. Verfahren nach Anspruch 2 oder 3,
bei dem die Eingang-Phasenverfolgung-Fehlersignalen bei den verschiedenen Frequenzen durch den Ionosphärenfehler-Schätzer (34) unter der Bedingung linear kombiniert werden, dass die Kombination geometriefrei ist und den ionosphärischen Term erhält.

5. Verfahren nach Anspruch 4,
bei dem der Ionosphärenfehler durch den Ionosphärenfehler-Schätzer (34) auf der Grundlage von Messungen der Phasenverfolgung-Fehlersignalen in aufeinanderfolgenden Zeitabschnitten eingestellt wird.

6. Verfahren nach Anspruch 5,
bei dem die Einstellung des Ionosphärenfehlers durch den Ionosphärenfehler-Schätzer (34) unter Verwendung eines Polynoms erster Ordnung als Regressionskurve ausgeführt wird.

**7.** Verfahren nach Anspruch 1,
bei dem:

- das räumliche Differenzsignal ein Bereich-Differenzsignal einschließlich Uhrenversatzfehler und troposphärischen Verzögerungsfehler ist,
- die Phasenextraktionseinheit (33) für einen verfolgten Satelliten (2) Eingang-Phasenverfolgung-Fehlersignale bei verschiedenen Frequenzen erzeugt, die den verschiedenen Trägersignalen (4) des verfolgten Satelliten (2) zugeordnet sind,
- von der Transformationseinheit (91) eine Mehrfrequenzschätzung des Ionosphärenfehler in Abhängigkeit von den Eingang-Phasenverfolgung-Fehlersignalen durchgeführt wird, die von der Phasen-Extraktionseinheit (33) zur Verfügung gestellt werden,
- der Ionosphärenfehler durch den Filter (92) gefiltert wird und bei dem
- der gefilterte Ionosphärenfehler durch die Rücktransformationseinheit (93) in die Ausgang-Phasenverfolgung-Fehlersignale zurücktransformiert wird, um Steuersignale für die Oszillatoren zu erzeugen, die die Oszillatorsignale bereitstellen.

**8.** Verfahren nach Anspruch 1,
bei dem:

- die Phasen-Extraktionseinheit (33) für jeden verfolgten Satelliten (2) Eingang-Phasenverfolgung-Fehlersignale bei verschiedenen Frequenzen erzeugt, die den verschiedenen Trägersignalen jedes verfolgten Satelliten (2) zugeordnet sind;
- durch die Transformationseinheit (101, 111) eine Mehrfrequenzschätzung des Positionsfehlers der aktuellen Position des Empfangsgeräts (5, 14) des Empfänger-Uhrenversatzfehlers, des Troposphärenfehlers und des Ionosphärenfehlers ausgeführt wird, in Abhängigkeit von dem Eingang-Phasenverfolgung-Fehlersignal, das von der Phasen-Extraktionseinheit (33) zur Verfügung gestellt wird;
- der Positionsfehler, der Empfänger-Uhrenversatzfehler, der Troposphärenfehler und der Ionosphärenfehler durch den Filter (102, 112) gefiltert werden;
- der Positionsfehler, der Empfänger-Uhrenversatzfehler, der Troposphärenfehler und der Ionosphärenfehler von der Rücktransformationseinheit (103, 113) in Ausgang-Phasenverfolgung-Fehler-Signale rücktransformiert werden, um Steuersignale für die Oszillatoren (32) zu erzeugen, die die Oszillatorsignale bereitstellen.

**9.** Verfahren nach Anspruch 7 oder 8,
bei dem die Mehrfrequenzphasenschätzung von der Transformationseinheit (91, 101) mit einem Schätzverfahren der gewichteten kleinsten Quadrate ausgeführt wird, das die quadratische Norm der Differenzen der gemessenen Phasenverfolgung-Fehler und der abgebildeten unbekannten Parameter minimiert, wobei die unbekannten Parameter in den Raum der gemessenen Verfolgungsfehler durch eine Abbildungsmatrix abgebildet werden.

**10.** Verfahren nach Anspruch 7 oder 8,
bei dem wenigstens eine Projektionseinheit (111) wenigstens einer der unbekannten Parameter einschließlich Positionsfehler, Empfänger-Uhrenversatzfehler, Troposphärenfehler und Ionosphärenfehler bestimmt durch:

- Ausführen einer Projektionsoperation, die die gemessenen Phasenverfolgung-Fehler und eine Abbildungsmatrix, die die unbekannten Parameter auf die gemessenen Phasenverfolgung-Fehler abbildet, auf einen Unterraum des wenigstens einen unbekannten Parameters projiziert, der aus der Liste ausgewählt worden ist, die den Positionsfehler, den Empfänger-Uhrenversatzfehler, den Troposphärenfehler und den Ionosphärenfehler umfasst; und durch
- Ausführen der Mehrfrequenzphasenschätzung mit einem Schätzverfahren der gewichteten kleinsten Quadrate, das die quadratische Norm der Differenzen der projizierten Phasenverfolgung-Fehler und des wenigstens einen abgebildeten unbekannten Parameters minimiert.

**11.** Verfahren nach Anspruch 9 oder 10,
bei dem die Abbildungsmatrix die Einheitsvektoren enthält, die von den verfolgten Satelliten zu den Empfängern zeigen, das Verhältnis zwischen der Frequenzen der Träger und einer Bezugsfrequenz und Abbildungskoeffizienten für die Troposphärenfehler.

**12.** Verfahren nach einen der Ansprüche 1 bis 11,
bei dem der Ionosphärenfehler für jeden Satelliten einzeln bestimmt wird und der Troposphärenfehler in Richtung des Zeniths bestimmt wird und auf die dazu geneigte aktuelle Richtung des verfolgten Satelliten projiziert wird.

13. Verfahren nach einen der Ansprüche 1 bis 12,
bei dem die von den Phasenextraktoren zur Verfügung gestellten Phasenverfolgung-Fehler durch eine gewichtete Summe einer Prüfstatistik mit quadratischen Fehlern überprüft wird, die anhand der Bereichs-Residuen und der invertierten Gewichtsmatrix berechnet wird, und bei dem eine Untermenge aller Messungen ausgewählt wird, deren gewichtete Summe der Prüfstatistik mit quadratischen Fehlern unter einem vorbestimmten Schwellwert liegt.

14. Verfahren nach einem der Ansprüche 1 bis 13,
bei dem bei der Initialisierung die Phasen der Trägersignale (4) einzeln verfolgt werden und bei dem der Betrieb in eine Vektor-Phasenverfolgung umgeschaltet wird, sobald die Anzahl der festgestellten Phasen für eine Vektor-Phasenverfolgung ausreicht.

15. Verfahren nach einem der Ansprüche 1 bis 14,
bei dem die ionosphärische Dispersion innerhalb des Frequenzbands eines bestimmten Trägersignals (4) korrigiert wird, bevor die Vektor-Phasenverfolgung ausgeführt wird.

16. Verfahren nach Anspruch 15,
bei dem die ionosphärische Dispersion innerhalb des Frequenzbands eines bestimmten Trägersignals mit Hilfe einer Kompensationseinheit (220) korrigiert wird durch:

- Schätzen des gesamten Elektronengehalts, indem Code-Messungen bei wenigstens zwei Frequenzen kombiniert werden,
- Bestimmen der ionosphärischen Verzögerungen für eine Anzahl von Frequenzen innerhalb des Frequenzbands,
- Umwandeln der ionosphärischen Verzögerungen in Phasenverschiebungen in der Frequenz-Domäne,
- Anwenden der konjugierten Phasenverschiebungen auf zugehörige Frequenzkomponenten des empfangenen Signals.

17. Verfahren nach Anspruch 15,
bei dem die ionosphärische Dispersion innerhalb des Frequenzbands eines bestimmten Trägersignals korrigiert wird durch:

- Schätzen des gesamten Elektronengehalts, indem Code-Messungen bei wenigstens zwei Frequenzen kombiniert werden,
- Auslesen der Phasenverschiebungen aus einer Nachschlagtabelle, die die Phasenverschiebungen in Abhängigkeit vom gesamten Elektronengehalt enthält.

18. Verfahren nach einem der Ansprüche 1 bis 17,
bei dem:

- das Uhrendifferenzsignal mit Filterparameter gefiltert wird, die für die Oszillatorcharakteristik optimiert sind und/oder bei dem
- das Troposphärenfehlersignal mit Filterparametern gefiltert wird, die auf atmosphärische Bedingungen optimiert sind und/oder bei dem
- das Ionosphärenfehlersignal mit Filterparametern gefiltert wird, die auf die Aktivität der Ionosphäre optimiert sind und/oder
- das Positionsdifferenzsignal oder Bereichsdifferenzsignal mit Filterparametern gefiltert wird, die auf die Empfängerdynamik optimiert sind.

19. Vorrichtung für die globale Satellitennavigation, die dazu eingerichtet ist, eine Vielzahl von Signalen von globalen Navigationssatelliten zu verfolgen,
**dadurch gekennzeichnet , dass** die Vorrichtung (5, 14) dazu eingerichtet ist, ein Verfahren nach einem der Ansprüche 1 bis 18 auszuführen.

**Revendications**

1. Procédé pour la poursuite de phase vectorielle d'une pluralité de signaux de porteuse de satellite de positionnement global (4) comprenant les étapes de :

   - détermination des signaux d'erreur de poursuite de phase d'entrée par une unité d'extraction de phase (33) en fonction de signaux de porteuse traçables (4) et de signaux d'oscillateur associés aux signaux de porteuse traçables (4) ;
   - transformation des signaux d'erreur de poursuite de phase d'entrée dans un domaine spatial par une unité de transformation (28, 41, 91, 101, 111) pour générer des signaux de différence spatiale ;
   - filtrage des signaux de différence spatiale par un filtre (27, 42, 92, 102, 112) ;
   - conduite d'une rétrotransformation des signaux de différence spatiale en signaux d'erreur de poursuite de phase de sortie par une unité de rétrotransformation (30, 43, 93, 103, 113) pour générer des signaux de commande pour les oscillateurs (32) qui génèrent les signaux d'oscillateur ;
   - génération de signaux de phase de sortie en fonction des signaux d'erreur de poursuite de phase de sortie par un accumulateur de signal de phase de sortie (31), **caractérisé en ce que**
   - pour un satellite poursuivi (2), l'unité d'extraction de phase (33) génère des signaux d'erreur de poursuite de phase d'entrée à différentes fréquences associées aux différents signaux de porteuse (4) du satellite poursuivi (2),
   - une estimation multifréquence de l'erreur ionosphérique est effectuée et
   - les signaux d'erreur de poursuite de phase de sortie à la sortie de l'unité de rétrotransformation (30, 43, 93, 103, 113) sont déterminés en fonction de l'erreur ionosphérique estimée.

2. Procédé selon la revendication 1, dans lequel :

   - un signal traçable d'un satellite individuel (2) est poursuivi,
   - le signal de différence spatiale est un signal de différence de portée comprenant une erreur de décalage d'horloge et une erreur de retard troposphérique,
   - pour le satellite poursuivi (2), les signaux d'erreur de poursuite de phase d'entrée transmis par l'unité d'extraction de phase (33) à différentes fréquences sont linéairement combinés par un estimateur d'erreur ionosphérique (34) pour déterminer l'erreur ionosphérique, et dans lequel
   - pour déterminer des signaux d'erreur de poursuite de phase de sortie à différentes fréquences associées aux différents signaux de porteuse (4) du satellite (2), une estimation de phase multifréquence est effectuée par l'unité de transformation (28) en fonction des signaux d'erreur de poursuite de phase d'entrée à différentes fréquences, après que l'erreur ionosphérique a été estimée dans l'estimateur d'erreur ionosphérique (34) et après que l'erreur ionosphérique a été supprimée dans les signaux d'erreur de poursuite de phase d'entrée à différentes fréquences.

3. Procédé selon la revendication 1, dans lequel :

   - pour chaque satellite poursuivi (2), l'unité d'extraction (33) de phase génère des signaux d'erreur de poursuite de phase d'entrée à différentes fréquences associées aux différents signaux de porteuse (4) de chaque satellite poursuivi (2) ;
   - pour chaque satellite poursuivi (2), les signaux d'erreur de poursuite de phase d'entrée fournis par l'unité d'extraction de phase (33) à différentes fréquences sont linéairement combinés par un estimateur d'erreur ionosphérique (34) pour déterminer l'erreur ionosphérique, et dans lequel
   - pour déterminer des signaux d'erreur de poursuite de phase de sortie associés à chaque satellite poursuivi (2), une estimation de phase multifréquence est effectuée par l'unité de transformation (41) en fonction des signaux d'erreur de poursuite de phase d'entrée à différentes fréquences après que l'erreur ionosphérique a été estimée dans l'estimateur d'erreur ionosphérique (34) et après que l'erreur ionosphérique a été supprimée dans les signaux d'erreur de poursuite de phase d'entrée à différentes fréquences.

4. Procédé selon la revendication 2 ou 3, dans lequel les signaux d'erreur de poursuite de phase d'entrée à différentes fréquences sont linéairement combinés par l'estimateur d'erreur ionosphérique (34) à condition que la combinaison soit sans géométrie et conserve le terme ionosphérique.

5. Procédé selon la revendication 4,

dans lequel l'erreur ionosphérique est ajustée par l'estimateur d'erreur ionosphérique (34) sur la base de mesures des signaux d'erreur de poursuite de phase à des périodes consécutives.

6. Procédé selon la revendication 5,
dans lequel l'ajustement de l'erreur ionosphérique est effectué par l'estimateur d'erreur ionosphérique (34) en utilisant un polynôme de premier ordre en tant que courbe de régression.

7. Procédé selon la revendication 1, dans lequel :

- le signal de différence spatiale est un signal de différence de portée comprenant une erreur de décalage d'horloge et une erreur de retard troposphérique,
- pour un satellite poursuivi (2), l'unité d'extraction de phase (33) génère des signaux d'erreur de poursuite de phase d'entrée à différentes fréquences associées aux différents signaux de porteuse (4) du satellite poursuivi (2),
- une estimation multifréquence de l'erreur ionosphérique est effectuée par l'unité de transformation (91) en fonction des signaux d'erreur de poursuite de phase d'entrée transmis par l'unité d'extraction de phase (33),
- l'erreur ionosphérique est filtrée par le filtre (92) et dans lequel
- l'erreur ionosphérique filtrée est rétrotransformée en signaux d'erreur de poursuite de phase de sortie par l'unité de rétrotransformation (93) pour générer des signaux de commande pour les oscillateurs qui génèrent les signaux d'oscillateur.

8. Procédé selon la revendication 1, dans lequel :

- pour chaque satellite poursuivi (2), l'unité d'extraction de phase (33) génère des signaux d'erreur de poursuite de phase d'entrée à différentes fréquences associées aux différents signaux de porteuse (4) de chaque satellite poursuivi (2) ;
- une estimation multifréquence de l'erreur de position de la position réelle du dispositif de réception (5, 14), l'erreur de décalage d'horloge de récepteur, l'erreur troposphérique et l'erreur ionosphérique est effectuée par l'unité de transformation (101, 111) en fonction des signaux d'erreur de poursuite de phase d'entrée transmis par l'unité d'extraction de phase (33) ;
- l'erreur de position, l'erreur de décalage d'horloge de récepteur, l'erreur troposphérique et l'erreur ionosphérique sont filtrées par le filtre (102, 112) ;
- l'erreur de position, l'erreur de décalage d'horloge de récepteur, l'erreur troposphérique et l'erreur ionosphérique sont rétrotransformées en signaux d'erreur de poursuite de phase de sortie par l'unité de rétrotransformation (103, 113) pour générer des signaux de commande pour les oscillateurs (32) qui génèrent des signaux d'oscillateur.

9. Procédé selon la revendication 7 ou 8,
dans lequel l'estimation de phase multifréquence est effectuée par l'unité de transformation (91, 101) avec un processus d'estimation quadratique pondérée qui réduit au minimum la norme quadratique des différences des erreurs de poursuite de phase mesurées et les paramètres inconnus mappés dans lesquels les paramètres inconnus sont mappés dans l'espace des erreurs de poursuite mesurées par une matrice de mappage.

10. Procédé selon la revendication 7 ou 8,
dans lequel au moins une unité de projection (111) détermine au moins un des paramètres inconnus comprenant l'erreur de position, l'erreur de décalage d'horloge de récepteur, l'erreur troposphérique et l'erreur ionosphérique par :

- la conduite d'une opération de projection qui projette les erreurs de poursuite de phase mesurées et une matrice de mappage, qui mappe les paramètres inconnus avec les erreurs de poursuite de phase mesurées, sur le sous-espace de l'au moins un paramètre inconnu choisi dans la liste comprenant l'erreur de position, l'erreur de décalage d'horloge de récepteur, l'erreur troposphérique et l'erreur ionosphérique ; et par
- la conduite de l'estimation de phase multifréquence avec un processus d'estimation quadratique pondéré qui réduit au minimum la norme quadratique des différences des erreurs de poursuite de phase projetées et l'au moins un paramètre inconnu mappé.

11. Procédé selon la revendication 9 ou 10,
dans lequel la matrice de mappage contient les vecteurs unitaires pointant depuis les satellites poursuivis vers le récepteur, le rapport entre les fréquences de la porteuse et une fréquence de référence et des coefficients de mappage pour les erreurs troposphériques.

**12.** Procédé selon l'une quelconque des revendications 1 à 11,
dans lequel l'erreur ionosphérique est déterminée pour chaque satellite individuellement et l'erreur troposphérique est estimée dans la direction du zénith et projetée dans la direction d'inclinaison réelle du satellite poursuivi.

**13.** Procédé selon l'une quelconque des revendications 1 à 12,
dans lequel les erreurs de poursuite de phase fournies par les extracteurs de phase sont vérifiées par une somme pondérée de statistiques de test d'erreur quadratique qui est calculée à partir des intervalles résiduels et de la matrice de pondération inverse et dans lequel un sous-ensemble de toutes les mesures est sélectionné dont la somme pondérée associée de statistiques de test d'erreur quadratique est au-dessous d'une valeur de seuil prédéfinie.

**14.** Procédé selon l'une quelconque des revendications 1 à 13,
dans lequel après initialisation, les phases des signaux de porteuse (4) sont poursuivies individuellement et dans lequel le fonctionnement est commuté en poursuite de phase vectorielle une fois que le nombre de phases verrouillées est suffisant pour la poursuite de phase vectorielle.

**15.** Procédé selon l'une quelconque des revendications 1 à 14,
dans lequel la dispersion ionosphérique dans la bande de fréquence d'un signal de porteuse particulier (4) est corrigée avant que la poursuite de phase vectorielle soit effectuée.

**16.** Procédé selon la revendication 15,
dans lequel la dispersion ionosphérique dans la bande de fréquence d'un signal de porteuse particulier est corrigée en utilisant une unité de compensation (220) par :

- l'estimation de la teneur total en électrons par combinaison de mesure de code d'au moins deux fréquences,
- la détermination des retards ionosphériques pour une pluralité de fréquences dans la bande de fréquence,
- la transformation du retard ionosphérique en déphasages dans le domaine de fréquence,
- l'application du conjugué des déphasages aux composantes de fréquence associées du signal reçu.

**17.** Procédé selon la revendication 15,
dans lequel la dispersion ionosphérique dans la bande de fréquence d'un signal de porteuse particulier est corrigée par :

- l'estimation de la teneur en électrons totale par combinaison de mesure de code d'au moins deux fréquences,
- l'extraction du déphasage depuis une table de correspondance contenant le déphasage en fonction de la teneur en électrons totale.

**18.** Procédé selon l'une quelconque des revendications 1 à 17, dans lequel :

- le signal de différence d'horloge est filtré avec des paramètres de filtre optimisés pour les caractéristiques de l'oscillateur et/ou dans lequel
- le signal d'erreur troposphérique est filtré avec des paramètres de filtre optimisés pour des conditions atmosphériques et/ou dans lequel
- le signal d'erreur ionosphérique est filtré avec des paramètres de filtre optimisés pour l'activité ionosphérique, et/ou dans lequel
- le signal de différence de position ou de différence de portée est filtré avec des paramètres de filtre optimisés pour la dynamique du récepteur.

**19.** Dispositif pour la navigation satellitaire globale adapté pour la poursuite d'une pluralité de signaux satellitaires de positionnement global
**caractérisé en ce que**
le dispositif (5, 14) est configuré pour exécuter un procédé selon l'une quelconque des revendications 1 à 18.

# FIG 1

Bandpass filter
Lownoise amplifier

Downconversion

Reference oscillator

Bandpass sampling

Vector PLL

Position estimation

# FIG 2

# FIG 3

# FIG 4

Ionospheric drift

Sat. 1 — 22 — 25 — Phase discrim.

Sat. 2 — Phase discrim.

Sat. K — Phase discrim.

NCO — 32

NCO

NCO

11 — 36

41 — Transformation into position, clock and tropospheric drift

$\Delta x$   $c\Delta\delta\tau$   $\Delta T_z$

42 — Loop filter   Loop filter   Loop filter

43 — Backtransformation into phase estimates

# FIG 5

Carrier tracking error [deg] vs. Carrier to noise power ratio of selected satellites [dBHz]

No LC: of 3 select. sat.

LC, az = 142.3°, el = 66.0° other sat.:$C/N_0$ = 30dBHz

LC, az = 123.6°, el = 52.0° other sat.:$C/N_0$ = 30dBHz

LC, az = 123.4°, el = 07.3° others sat.:$C/N_0$ = 30dBHz

LC, az = 142.3°, el = 66.0° other sat.:$C/N_0$ = 40dBHz

LC, az = 123.6°, el = 52.0° other sat.:$C/N_0$ = 40dBHz

LC, az = 123.4°, el = 07.3° others sat.:$C/N_0$ = 40dBHz

FIG 6

FIG 7

# FIG 8

Legend:
- Poly.,L1:10cm,E5a/b:1mm,1Hz
- Exp.,L1:10cm,E5a/b:1mm
- Poly.,L1:10cm,E5a/b:1mm,50Hz
- Poly.,L1:1mm,E5a/b:10cm,1Hz
- Exp.,L1:1mm,E5a/b:10cm
- Poly.,L1:1mm,E5a/b:10cm,50Hz

Y-axis: Standard deviation of ionospheric drift estimate [m/s]
X-axis: Time [s]

# FIG 9

EP 2 279 426 B1

# FIG 10

45

## FIG 11

# FIG 12

Random jamming of 1 frequency

# FIG 13

Random jamming of 2 frequencies

# FIG 14

Tracking of sat. with θ = 47.7°, φ = -73.3°

# FIG 15

Tracking of sat. with θ = 5.1°, φ = 132.3°

## FIG 16

Tracking of sat. with $\theta = 14.5°$, $\phi = 44.9°$

## FIG 17

Tracking of sat. with $\theta = 17.3°$, $\phi = 90.4°$

**FIG 18**

Tracking of sat. with θ = 47.5°, φ = − 148.6°

**FIG 19**

Tracking of sat. with θ = 14.0°, φ = 174.4°

## FIG 20

Tracking of satellite pair in NE

## FIG 21

# FIG 22

~ 220

Ionospheric delay (wideband model)

$$S_i(f) = e^{-j2(f - f_0) \cdot t(f)} = e^{-j2(f - f_0) \cdot \frac{40.3\, TEC}{f^2\, c}}$$

$\delta(t - kT_S)$ with $k \in \{0, 1, ..., N_S-1\}$

$s[k] = s_R[k] + s_i[k]$

$\delta\left(f - (f_0 - \frac{N_s-1}{2} \cdot \frac{f_s}{N_s} + \frac{k \cdot f_s}{N_s})\right)$

224

$S_i[k]$

$s(t)$    $s[k]$    | F |    $S[k]$    | |    | ⎍ |    | F⁻¹ |

Sampling      FFT      Low pass filter    IFFT

222     223     225     226

221

# FIG 23

E5a BPSK signal with 20 MHz bandwidth

Signal with dispersive ionosphere

Time [chips]

FIG 24

E5a BPSK signal with 50 MHz bandwidth

FIG 25

E5a BPSK signal with 75 MHz bandwidth

FIG 26

E5a BPSK signal with 100 MHz bandwidth

## FIG 27

E5 AltBOC signal: real part

## FIG 28

E5 AltBOC signal: imaginary part

## FIG 29

E5 correlation result for 100 TECU

Reduction in correlation peak

ionospheric delay

E5 signal without iono.
E5 signal with disp. iono. (real part)
E5 signal with disp. iono. (imaginary part)

E5 AllBOC correlation result

Time [s]

x 10⁻⁷

## FIG 30

Phase bias of PLL output for 100 TECU

Impact of E5 intra-band ionospheric dispersion on carrier tracking

BW = 20 MHz
BW = 30 MHz
BW = 40 MHz
BW = 50 MHz

Phase change at PLL output [deg]

E5 AllBOC(15,10)

E5a BPSK(10)

TEC [TECU]

## FIG 31

Phase jump on satellite clock

## FIG 32

Erroneous weighting matrix for VPLL

— MC - VPLL with correct weighting matrix
-- MC - VPLL with imperfect weighting matrix
(low elev. sat. affected by 5 times larger)
······· Independant PLL tracking

## FIG 33

Amplification factors for $\sigma_\phi$ and WSSE (y-axis)

Amplification of WSSE

Amplification of $\sigma_\phi$

Reduction of $\sigma_\phi$

$10^1$

$10^0$

Scaling factor $\gamma$ for the 2 satellites of lowest elevation

## FIG 34

Erroneous weighting of low elev. sat.

Amplification factor of WSSE test statistics (y-axis)

Amplification factor of $\sigma_\phi$ of tracked phase

# FIG 35

Erroneous weighting of high elev. sat.

Amplification factor of WSSE test statistics

Amplification factor of $\sigma_\phi$ of tracked phase

# FIG 36

$A_{WSSE}$ in dependency of the phase offsets

Phase offset $\theta$ between direct and reflected E5a signal

$A_{WSSE} = 10$

70
60
50
40
30
20
10

20
30
40
50
60
70

Phase offset $\theta$ between direct and reflected E1 signal [deg]

-150  -100  -50  0  50  100  150

**REFERENCES CITED IN THE DESCRIPTION**

**Patent documents cited in the description**

- US 6313789 B1

- US 20050116857 A1

**Non-patent literature cited in the description**

- **P. HENKEL ; C. GÜNTHER.** Three frequency linear-combinations for Galileo, 4-th IEEE Workshop on Positioning. *Proc. of 4-th IEEE Workshop on Positioning, Communication and Navigation (WPNC '07,* March 2007, 239-245
- Joint L/C Band Code-Carrier Linear Combinations for Galileo. **P. HENKEL ; C. GÜNTHER.** International Journal of Navigation and Observation. Hindawi Publ, January 2008
- **C. HEGARTY ; M. EL-ARINI ; T. KIM ; S. ERICSON.** Scintillation modeling for GPS-Wide Area Augmentation System receivers. *Radio Science,* September 2001, vol. 36 (5), 1221-1231
- **S. PULLEN ; G. OPSHAUG ; A. HANSEN ; T. WALTER ; P. ENGE ; B. PARKINSON.** A Preliminary Study of the Effect of Ionospheric Scintillation on WAAS User Availability in Equatorial Regions. *Proc. of ION-GPS '98,* September 1998, 687-699
- **T. OLSEN ; B. FORSSELL.** Jamming GPS - Susceptibility of some Civil GPS Receivers. *GPS World,* January 2003
- Fundamentals of Signal Tracking Theory, Global Positioning System: Theory and Application Volume I. **J. SPILKER.** Progress in Aeronautics and Astronautics. 1996, vol. 163
- GPS Receivers, Global Positioning System: Theory and Application Volume I. **A. DIERENDONCK.** Progress in Aeronautics and Astronautics. 1996, vol. 163
- **J. SEO ; T. WALTER ; E. MARKS ; T. CHIOU ; P. ENGE.** Ionospheric Scintillation Effects on GPS Receivers during Solar Minimum and Maximum. *Proc. of Intern. Beacon Satellite Symposium,* June 2007
- **A. NIELL.** Global Mapping Functions for the Atmosphere Delay at Radio Wavelengths. *Journal of Geophysical Research,* 1996, vol. 101, 3227-3246
- **S. BASU.** 250 MHz/GHz Scintillation parameters in the Equatorial, Polar, and Auroral Enviroments. *IEEE Journal of Selected Areas in Communications,* February 1987, vol. SAC-5 (2), 102-115

- **M. ZHODZISHSKY ; S. YUDANOV ; V. VEITSEL ; J. ASHJAEE.** Co-Op Tracking for carrier phase. *Proc. of ION-GPS '98,* September 1998, 653-664
- **P. HENKEL ; K. GIGER ; C. GÜNTHER.** Multi-Carrier Vector Phase Locked Loop for Robust Carrier Tracking. *Proc. of European Navigation Conference (ENC), Toulouse, France,* April 2008
- **S. PULLEN ; Y.-S. PARK ; P. ENGE.** The Impact and Mitigation of Ionosphere Anomalies on Ground Based Augmentation of GNSS. *Proc. of 12-th International Ionospheric Effects Symposium,* May 2008
- **E. KAPLAN ; C. HEGARTY.** Understanding GPS - Principles and applications. Artech House, 2006
- **P. TEUNISSEN.** Adjustment theory - an introduction, Series on Mathematical Geodesy and Positioning. TU Delft, 2003
- **G. GAO ; S. DATTA-BARUA ; T. WALTER ; P. ENGE.** Ionospheric Effects for Wideband GNSS Signals. *ION Annual Meeting, Cambridge (MA), USA,* April 2007
- **P. MISRA ; P. ENGE.** Global Positioning System - Signals, Measurements, and Performance. Ganga-Jamuna Press, 2006
- **P. HWANG ; G. GRAW ; J. BADER.** Enhanced Differential GPS Carrier-Smoothed Code Processing Using Dual-Frequency Measurements. *J. of Navigation,* 1999, vol. 46 (2), 127-137
- Weighted RAIM for Precision Approach. **T. WALTER ; P. ENGE.** Proc. of ION-GPS. Palm. Springs (CA), USA, September 1995, 1995-2004
- **Y. GEORGIADOU ; A. KLEUSBERG.** On carrier signal multipath effects in relative GPS positioning, Manuscripta geoclaetica. Springer Verlag, 1988, vol. 13, 172-179